(19) **Europäisches Patentamt**
**European Patent Office**
**Office européen des brevets**

(11) **EP 1 602 192 B1**

(12) **EUROPEAN PATENT SPECIFICATION**

(45) Date of publication and mention
of the grant of the patent:
**04.04.2007 Bulletin 2007/14**

(51) Int Cl.:
*H04L 5/02* (2006.01)    *H04L 27/26* (2006.01)

(21) Application number: **03816236.8**

(22) Date of filing: **10.03.2003**

(86) International application number:
**PCT/EP2003/002437**

(87) International publication number:
**WO 2004/082200 (23.09.2004 Gazette 2004/39)**

(54) **Apparatus and method for detcting a group of received symbols**

Vorrichtung und Verfahren zur erkennen einer Gruppe von empfangenen eichen

Dispositif et procédé de detection d'un groupe de symboles recus

(84) Designated Contracting States:
**DE GB**

(43) Date of publication of application:
**07.12.2005 Bulletin 2005/49**

(73) Proprietor: **NTT DoCoMo, Inc.**
**Tokyo (JP)**

(72) Inventors:
• **AUER, Gunther**
**80339 München (DE)**
• **RAULEFS, Ronald**
**80538 München (DE)**
• **DAMMANN, Armin**
**82266 Inning (DE)**
• **KAISER, Stefan**
**82205 Gilching (DE)**

(74) Representative: **Zinkler, Franz**
**Schoppe, Zimmermann, Stöckeler & Zinkler**
**Postfach 246**
**82043 Pullach bei München (DE)**

(56) References cited:
**EP-A- 1 244 242**        **EP-A- 1 244 243**

• **BURY A ET AL: "DIVERSITY COMPARISON OF SPREADING TRANSFORMS FOR MULTI-CARRIER SPREAD SPECTRUM TRANSMISSION METHODS" PROCEEDINGS OF THE EUROPEAN WIRELESS, XX, XX, September 2000 (2000-09), pages 43-47, XP001051860**
• **P.L. KAFLE ET AL.: "An iterative multiuser receiver using groupwise MLSE and interference cancellation in a MC-CDMA system" PROCEEDINGS OF THE 2002 CANADIAN CONFERENCE ON ELECTRICAL AND COMPUTER ENGINEERING, 2002, pages 1236-1241, XP002256081**

**Description**

The present invention is in the field of telecommunications and, in particular, in the field of code division multiple access (CDMA) techniques in connection with multi channel modulation techniques.

Recently, multiple access systems based on direct sequence CDMA have achieved great importance for mobile radio applications. It has been found out that the capacity of direct sequence CDMA systems, however, is limited by both other-user interference and inter-symbol interference (ISI) in high data rate applications. Therefore, it has been proposed to combine CDMA techniques with multi channel modulation techniques. A prominent representative of multi channel modulation techniques is the orthogonal frequency division multiplex (OFDM) technique. The principle of multi-carrier modulation is to map a serial high rate source stream onto multiple parallel low rate sub-streams and to modulate each sub-stream on another carrier. OFDM is known to be a low-complex technique, which efficiently modulates multiple sub-carriers by using a certain kind of digital signal processing, which will be described in the following.

A communication system using multi-carrier modulation transmits a sequence consisting of $N_c$ complex-valued source symbols $S_n$ in parallel on the $N_c$ sub-carriers. The multi-carrier modulator maps a sequence of $N_c$ serial source symbols of rate 1/T onto $N_c$ parallel sub-streams. The symbol rate per sub-stream, therefore, reduces to $1/(N_cT)$. The sub-carriers have a spacing, which is equal to the inverse of the source symbol rate. Orthogonality between the signals on the $N_c$ sub-carriers is achieved, when a rectangular pulse shaping is assumed. The $N_c$ parallel modulated source symbols are referred to as an OFDM symbol of a certain duration. In the discrete domain, the multi-carrier modulation is implemented by using an inverse discrete Fourier transform or a more computationally efficient inverse Fast Fourier transform. A multi-carrier transmission system includes an OFDM transmitter, which is followed by a digital to analogue converter and optionally a high frequency front end. The analogue signal from the digital to analogue converter in the base band or the radio frequency output signal from the radio frequency front end is transmitted via a transmission channel having multi-path propagation characteristics. At the receiver, a signal obtained from the multi-path propagation transmission channel is processed by a receiver front end and provided to an analogue-to-digital converter. The digital signal output by the converter is input into an OFDM demodulator and output to a parallel-to-serial converter to obtain a sequence of received demodulated data symbols.

On the transmitter side, there can be provided a mapper, which is operative to map groups of source data bits onto discrete states in a complex constellation diagram. In case of binary phase shift keying, the constellation diagram includes two constellation states, i.e., 0 degrees and 180 degrees. In quaternary phase shift keying or quaternary quadrature amplitude modulation, the constellation diagram includes four constellation points, which means that two bits are used to select an associated constellation point. In sixteen quadrature amplitude modulation, there exist sixteen states in the constellation diagram, which means that four source data bits are used to select one of the sixteen different states in the constellation diagram. Generally, constellation diagrams are termed as M-ary constellation diagrams, wherein the number M indicates the cardinality of the constellation diagram, i.e., the number of different possible states in the constellation diagram.

The mapper outputs a stream of complex numbers. Each complex number defining one possible state in the constellation diagram. These complex numbers are serial/parallel converted and input into an IDFT or IFFT block to perform the multi-carrier modulation. The output of the IDFT or IFFT block is parallel/serial converted. Then, a guard-interval/cyclic prefix is added to complete the OFDM symbol, which is, as has been outlined above, digital/analogue converted and transmitted via the transmission path.

At the receiver side, after analogue/digital conversion, the guard interval is removed. The then obtained stream of digital values is serial/parallel converted and input into a DFT or FFT block to obtain a stream of complex numbers, which represent the received version of the complex numbers output by the mapper on the transmitter side. After a corresponding demapping, received source data bits are obtained.

It is to be outlined here that the above general description of OFDM is only for illustration purposes. Typical transmission systems based on OFDM also include a channel encoder on the transmitter side, an interleaver on the transmitter side, which is connected before the IDFT or IFFT block and a corresponding deinterleaver on the receiver side, which is connected before the DFT or IFFT block etc.

As it has been outlined above, there is increasing interest in combining multi-carrier or, generally, multi-channel modulation techniques with the CDMA technique. This is due to the fact that MC/CDMA signals are characterized by their multiple repetition of each data symbol due to the multiplication with a high rate spreading code in the frequency domain. Additionally, it is to be pointed out here that an MC-CDMA signal transmits the data modulated chips of a spreading code not necessarily on neighbouring sub-carriers. This can be achieved by a kind of deterministic distribution so that CDMA generated symbols that belong to one user group having different spreading codes can be assigned to any sub-carriers, which do not have to be neighboured or frequency-adjacent sub-carriers. Another way to obtain this feature is the use of an interleaver, which can be operative to provide a frequency interleaving, i.e., a scrambling of the sub-carrier mapping within one OFDM symbol to obtain frequency diversity. Alternatively, the scrambler can be implemented to also perform a scrambling between subsequent OFDM symbols so that a time diversity can be obtained. To reach a system benefiting from time diversity and frequency diversity, the interleaver has to be constructed so that it scrambles carrier amplitudes in frequency and time.

To obtain space diversity, the effect of two physically different transmission paths from a receiver to a transmitter for a moving receiver or to two different transmitters for a stationary receiver, is advantageously combined with CDMA techniques also including certain convolution codes having code rates preferably below 0.5.

To generate a multi-carrier spread spectrum signal, a symbol to be spread is multiplied by a certain spreading vector or spreading code, which is exclusively assigned to the user from which the symbol to be spread originates. By spreading a symbol with a spread sequence having a number L of real or complex spreading coefficients, one symbol is transformed into a number L of so-called chips. The chip rate is equal to the data rate multiplied by L for one user. In a basic CDMA/OFDM system, the sequence of chips is serial-to-parallel converted, and the chips are assigned to several sub-carriers. Naturally, the purpose of CDMA is to allow multiple users on several sub-carriers. To this end, the data symbol of each user, i.e., a group of data symbols, in which each data symbol may originate from a different user, is spread by a code matrix existing of orthogonal code vectors or spreading vectors. When the users are considered separately, the data bit from each user is spread by its own uniquely assigned code vector so that for each user a sequence of chips is obtained. When the case of eight users is considered, and when the spreading sequence has a length of $L = 8$, spreading of one data symbol from each user, i.e., 8 data symbols, results in 8 chip sequences each having 8 chips. These chip sequences are then added chip by chip. This means that the first chips from each sequence are added together to obtain a first resulting chip. Additionally, the second chips from each chip sequence are added together to obtain a resulting second chip and so on. In the end of the addition process, a set of 8 resulting chips is obtained. Then, these 8 chips are assigned to 8 different sub-carriers and then multi-carrier modulated as has been outlined above.

More background information on this topic can be found in a thesis from Stefan Kaiser titled "Multi-Carrier DCMA Mobile Radio Systems --- Analysis and Optimization of Detection, Decoding, and Channel Estimation", January 1998, VDI Verlag Düsseldorf, Germany, ISBN 3-18-35310-0. In this thesis, there are also described several modifications of a basic multi-carrier-CDMA transmitter for a down link scenario including a M-modification, a Q-modification and a MQ-modification. Another scenario is the case, in which different symbols of one user are CDMA processed. In this scenario, each symbol has associated therewith a unique spreading sequence.

For multi-carrier-CDMA data detection, several data detection techniques are proposed such as single user detection techniques and, in particular, maximum ratio combining (MRC), equal gain combining (EGC), zero-forcing (ZF) equalization or minimum mean square error (MMSE) equalization, sub-optimal MMSE equalization or controlled equalization. Additionally, multi-user detection techniques based on a maximum likelihood criterion are explained, and, in particular, maximum likelihood sequence estimation (MLSE) and maximum likelihood symbol-by-symbol estimation (MLSSE), which optimally estimate the transmitted data sequence or the transmitted data symbol. For MLSE, the sequence error probability is minimized, i.e., the data symbol vector error probability, which is equivalent to maximizing an additional probability that a certain group of symbols has been transmitted when a certain group of received symbols are present. In MLSSE, symbol error probability is minimized, which is equivalent to maximize a conditional probability that a certain symbol was transmitted when a certain group of symbols has been received. MLSSE techniques normally reach a lower symbol error rate compared to MLSE.

The thesis "Efficient Multi-Carrier Spread Spectrum Transmission based on Orthogonal Frequency Division Multiplexing", Fortschrittsberichte, Nr. 685, VDI Publishers, Düsseldorf, Germany, 2001, as well as Hiroyuki Atarashi, Noriyuki Maeda, Sadayuki Abeta, and Mamoru Sawahashi: "Broadband packet wireless access based on vsf-ofcdm and mc/ds-cdma", in Proceedings IEEE Personal, Indoor and Mobile Radio Communications (PIMRC) 2002, Portugal, September 2002, pp. 992-997, and Stefan Kaiser: "On the performance of different detection techniques for ofdm-cdma in fading channels" in Proceedings IEEE Global Telecommunications Conference (GLOBECOM 1995), Singapore, Singapore, November 1995, pp. 2059-2063), disclose several thoughts on the combination of multi-carrier spread spectrum techniques and OFDM. In particular, Bury states that the commonly used Hadamard transform (HT) for spreading is not optimum. The cases where the vector of transmitted symbols consists either of only ones or of only minus ones is considered. Both of these transmitted symbol vectors fall into the direction of the first row in a Hadamard Matrix while being orthogonal to all remaining rows. Thus, after spreading the transmitted vectors for these two cases the spread vectors are distinct only in the first element, i.e., they differ only at a single dimension. In other words, after spreading the transmitted energy of either of these vectors is concentrated only in a single fading sub-carrier. When either of these two vectors has been transmitted, a deep fade of the carrier coefficient of this single sub-carrier dramatically increases the probability of a wrong detection.

In a Hadamard spreading Matrix of size LxR, there exist two such vectors which fall into the direction of a row in the spreading matrix. This effect can be reduced when the block size L is increased, i.e., when the length of one code vector is made large.

For overcoming the problem with "bad" symbol vectors, it is suggested using a rotated transform, which is derived from an original transform by rotating matrix columns in the complex plane. Transforms suitable for being rotated are Hadamard and discrete Fourier transforms. The rotated transforms make sure that each point in a multi-dimensional signal constellation has energy at all sub-carriers, thus enabling a diversity gain from each sub-carrier. The concentration of the energy at a point in the multi-dimensional signal constellation onto one sub-carrier is, therefore, avoided. This is due to the fact that the Euclidian distance between any pair of constellation points is distributed equally over all dimensions for an optimum rotated transform.

For detection, it is outlined that a maximum likelihood technique involves an exhaust search of the nearest point in a signal constellation so this technique can only be performed for comparably small constellations. Therefore, sub-optimum equalization methods with subsequent single-symbol detections are discussed for a simple linear minimum mean square error (MMSE) equalizer or a more advanced multistage equalizer using a soft feed-back with individual soft values for all symbols.

For MMSE style single user detectors, rotated Hadamard transforms outperform rotated Fourier transforms while in the connection of maximum likelihood detection, the rotated Fourier transform performs best. For further improving the energy distribution by means of rotated transforms, an optimization of the selection of rotation angles is suggested. However, it is stated that for this improvement, which eventually may result in a better bit error rate performance at the detector, more advanced equalization methods compared to simple linear equalization techniques are necessary.

US patent application publication 2002/0181562 A1, a family member of EP 1 244 244, discloses an equalisation method and device of the GMMSE type. Samples of a received signal are obtained by sampling at a chip frequency. These samples are input in a serial/parallel converter 510. The parallel converted chip samples are input into an FFT block 520 to obtain a vector of amplitude components of different carriers. This vector is input into an adapted filter module performing a multiplication of the FFT output by a matrix corresponding to the multiplication of a channel state matrix, a code matrix and a vector of transmission levels. The output of the adapted filter is input into an estimation module for resolving a linear system of P equations with P unknowns, wherein the unknowns are the estimated symbols. The estimation module is provided with a matrix depending on the vector of transmission levels, an auxiliary matrix and a variance of a noise in the system. The auxiliary matrix is a multiplication of the code matrix, the square of the channel state matrix and the code matrix. The output of the estimation module 580 is a vector of estimated symbols. An MMSE criterion is applied so that the mean square error between the estimated symbols and the transmitted symbols is minimized. Due to the application of the Wiener-Hopf equation, the solution of the MMSE problem is a straight-forward matrix calculation. WH codes, rotated WH codes, Fourier codes or rotated Fourier codes are used, since these codes allow an easy to implement and efficient calculation of the auxiliary matrix calculated by the matrix calculator.

It is an object of the present invention to provide an improved concept for detecting received symbols, which has a better signal to noise ratio at a certain allowed bit error rate or which has a better bit error rate at a certain signal to noise ratio.

This object is achieved by an apparatus for detecting received symbols in accordance with claim 1 or a method of detecting received symbols in accordance with claim 23 or a computer program in accordance with claim 24.

The present invention is based on the finding that the detection of a group of received symbols stemming from a CDMA multi-channel modulation transmitter is significantly improved over single user detection techniques when a multi-user detection technique is used for symbol detection, in which a rotation applied to code vectors in a transmitter is accounted for. Therefore, every detection technique which makes use of e.g. a squared Euclidian distance, in which the rotation information is accounted for, can benefit from the better signal to noise ratio for the same bit error rate or from the better bit error rate for the same signal to noise ratio. Examples for such detection techniques which make use of so called candidate values depending on the rotation information, which can be Euclidian distances, are MLSE with hard decision, MLSE with soft decision, MLSSE with hard decision, MLSSE with soft decision, MAPSE (Maximum A Priori Sequence Estimation) with hard decision, MAP Symbol by Symbol (also known as the BCJR algorithm) and the Max Log MAP algorithm.

In particular, it has been found out that in a maximum likelihood sequence estimation (MLSE) algorithm, in which the rotation of code vectors is considered for determining the Euclidian distances, from which a minimum distance is selected by a final selector, results in a more reliable detection. When the resulting bit error rate is regarded, it has been found out that for an admissible bit error rate at the receiver of $10^{-3}$ and for a fully loaded system, an improvement by about 2dB with respect to the necessary signal to noise ratio is achieved. This value is linked to a case, in which 8 users in a user group are present, i.e., in which the length of a spreading sequence is equal to 8.

For smaller block lengths, the improvement by detecting groups of received data symbols which are based on a transmitter processing using rotated transforms is even higher. Simulations have shown that for a spreading sequence having a block length of 4 and for a fully loaded system, a signal to noise ratio improvement at an allowable bit error rate of $10^{-3}$ even amounts to 3dB. A similar effect is also obtained when other detection techniques such as MLSSE are implemented. Naturally, the detection technique can be based on a hard or a soft decision. When a hard decision is performed, the MLSE or MLSSE algorithm directly delivers the detected symbols. When a soft decision is performed, the MLSE or MLSSE algorithm outputs a sequence of soft information representing a probability of bits having certain values. Each soft information in the sequence of soft information belongs to a bit which is then decided by a soft input decoder such as a channel decoder. A prominent channel decoder is the well known Viterbi decoder.

This improvement can be exploited in several ways. One way is to keep constant the admissible bit error rate inherent to a receiver. In this case, the signal to noise ratio at the receiver can be decreased by 2 to 3 dB which immediately results in a 50 % power reduction of the corresponding transmitter. When the corresponding transmitter is a mobile transmitter, the battery life thereof can be almost doubled. When an downlink scenario is considered, i.e., when the transmitter is a base station and the receiver is a mobile unit, a kept constant base station transmitter power with the corresponding decrease of the bit error rate at the receiver also has a lot of advantages. The main advantage is that for the same base station transmitter power, the base station cell size in a cellular wireless system can be kept constant so that the intercell interference can be decreased, which can be used to increase the data capacity of the system.

Alternatively, the cell size can be increased to obtain a better coverage.

Another possibility is to implement a multi transmitter scenario, in which a user in a cell makes use of received signals from neighbouring cells to enhance the data capacity of a radio system. This concept is also known as the MC-SS-MA technique (MS-SS-MA = Multi Carrier Spread Sprectrum Multiple Access).

Enhancing the data capacity, and therefore the maximum number of users who can simultaneously participate in a communication is a great advantage in view of the fact that the number of users increases more and more so that in densely populated areas the user demand already exceeds the capacity of known cellular systems. For the future, it is believed that this bad situation will at least continue or even worsen.

All this is achieved at already no or only small costs at the receiver. The only thing that has to be implemented in the receiver in addition to the normal maximum likelihood sequence estimation algorithm is the rotation information so that same is accounted for when the Euclidian distances for the final selection of the most likely transmitted sequence are determined.

The introduction of the rotation information into the detector can be obtained in several ways. One way is to substitute the code matrix in a maximum likelihood sequence estimation receiver by a rotated code matrix, in which each code vector is phase-shifted by a certain rotation angle exclusively assigned to this code matrix. Then, no additional amendments to the inner MLSE algorithm is necessary. When, on the other hand, it is not preferred to substitute the unrotated code matrix by a rotated code matrix, the possible groups of transmitted symbols which take part in the maximum likelihood sequence estimation and which can be stored in a look-up table at the receiver can be replaced by rotated groups of transmission vectors. In this case, also no amendments to the inner MLSE algorithm are necessary.

Alternatively, when it is not desirable to change the code matrix or the possible transmitted symbol groups, the influence of the rotation on the code vectors can be accounted for by multiplying the code matrix or the possible group of symbols during calculating the Euclidian distances on the fly. Since one has to deal only with phase-shifts, such a "multiplication" can be easily implemented by add and shift operations in a hard-wired application specific signal processor.

In a preferred embodiment of the present invention, the M or Q or MQ modification of the basic CDMA multi-carrier system is used. This is due to the fact that it is desirable to have a high number of sub-carriers but to have short length spreading vectors. The computational effort for a maximum likelihood sequence estimation increases with code vectors having increasing lengths. To decouple the number of sub-carriers and the length of a code vector, the M-, the Q- or the MQ-Modification of the basic MC-CDMA transmission system is preferred. In these modifications, a data symbol is not spread over all sub-carriers but only over a certain small number of sub-carriers so that the computational complexity of the MLSE algorithm in the detector can be kept low. This technique is advantageously combined with an interleaver so that the influence of deep fades is reduced even though a number of sub-carriers carrying the same information is only in the range of 4 to 16.

It is to be noted here that the above advantages are even more valuable in the highly competitive market of mobile systems and, in particular, mobile receivers such as hand-held cellular telephones, which include the inventive detector. It is to be remarked that seemingly "small" price reductions attainable by the inventive improvements as to bit error rate or signal to noise ratio can be responsible for one company increasing their market position while the seemingly small differences can be responsible for another company loosing its market position. Therefore, the inventive detection concept is especially valuable when it is implemented in hand-held mobile transmitting/receiving devices which are manufactured and sold at large volumes.

Preferred embodiments of the present invention are described in detail with respect to the following figures, in which:

Fig. 1     shows a block diagram of the inventive apparatus for detecting a group of received symbols;

Fig. 2     shows the maximum likelihood sequence estimation algorithm, in which the rotation information is used;

Fig. 3     shows a preferred selection of rotation angles for distinct spreading vectors;

Fig. 4a     shows a code matrix before rotation;

Fig. 4b     shows a code matrix after rotation;

Fig. 5     shows the vector of possible transmitted symbols after rotation;

Fig. 6     shows a conceptual block diagram of applying the rotational information on the code matrix at the detector;

Fig. 7     shows a conceptual block diagram of applying the rotation on a group of transmitted symbols;

Fig. 8     shows a transmission channel and a receiver, in which the inventive detector can be advantageously used;

Fig. 9     shows a block diagram of a basic CDMA transmitter;

Fig. 10     shows a block diagram of a M modification of the basic set-up in Fig. 9.

Fig. 11     shows a Q modification of the basic CDMA system in Fig. 9;

Fig. 12     shows a MQ modification of the basic CDMA system of Fig. 9;

Fig. 13     shows a comparison of a maximum likelihood sequence estimation detector without rotation information and with rotation information for a group of 8 users;

Fig. 14     shows a comparison of a maximum likelihood sequence estimation detector with and without rotation information for a group of 4 users;

Fig. 15     shows a detection algorithm based on MLSE and hard decision;

Fig. 16     shows a detection algorithm based on MLSE and soft decision;

Fig. 17     shows a detection algorithm based on MLSSE and hard decision; and

Fig. 18     shows a detection algorithm based on MLSSE and soft decision.

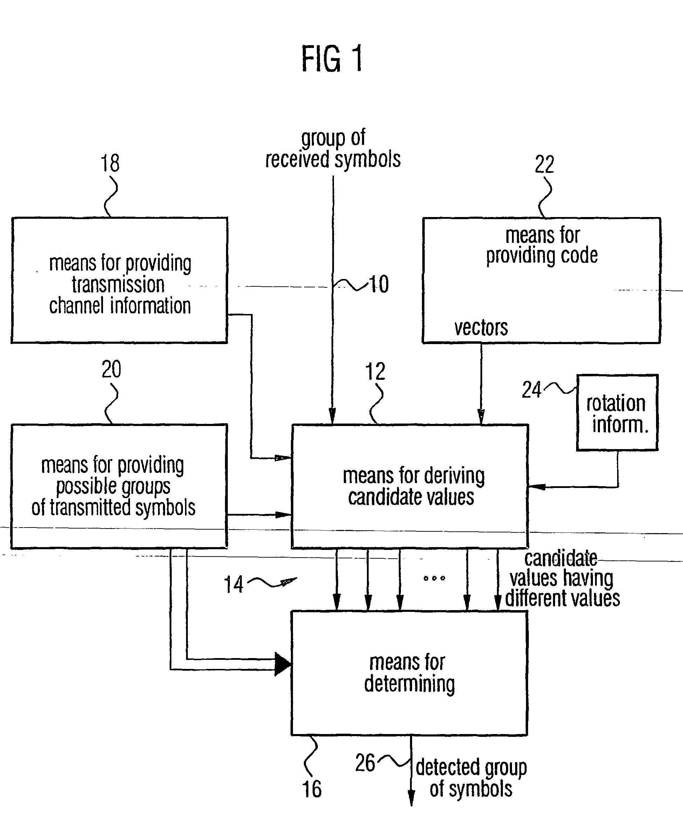

Fig. 1 shows a conceptual block diagram of an apparatus for detecting a group of receiver symbols at an input 10. The group of received symbols is input into a means 12 for deriving candidate values which are output at 14 to a means 16 for determining the received symbols. The means 16 is operative to use the candidate values (which depend on the rotation information) in any useful way for finally obtaining detected symbols. For deriving candidate values, the means 12 is connected to a means for providing transmission channel information 18, a means for providing possible groups of transmitted symbols 20, means for providing code vectors 22, and a means for providing rotation information 24.

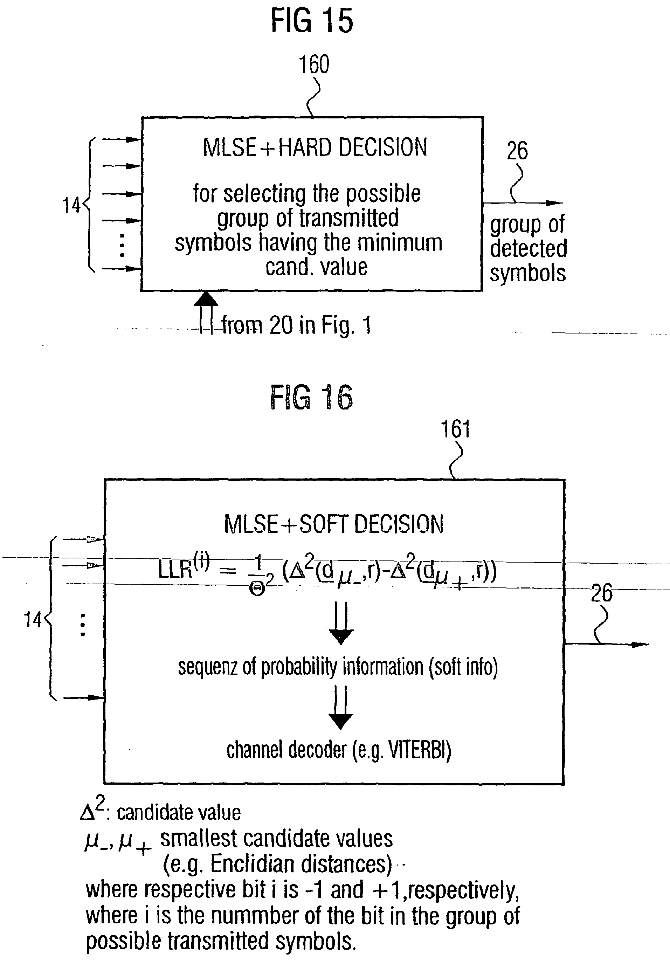

In case of MLSE with hard decision, the means 16 is a minimum or maximum selector 160 (Fig. 15), which is operative to find out the extreme candidate value among the candidate values 14 and to output the possible group of transmitted symbols which has resulted in the extreme value among the candidate values 14. This selected group of transmitted symbols is indicated or output by the minimum selector 16 as the detected group of symbols at an output 26.

It is to be remarked here, that in the following, the selector 160 from Fig. 15 is termed as the minimum selector since it looks for the candidate value having the minimum value. When the MLSE algorithm is rewritten such that the most likely transmitted symbol groups results in a maximum value, the selector looks for the maximum candidate value.

In particular, the means 12 for deriving is operative to derive candidate values based on the difference between the group of received symbols and a value dependent on a group of transmitted symbols, the code vectors applied in a transmitter, information on the phase-rotation applied in the transmitter and the information on the transmission channel. In particular, the means 12 for deriving is operative to derive a candidate value for a plurality of a possible group of transmitted symbols. In a straight forward implementation, the means 12 for deriving is operative to derive a candidate value for each possible group of transmitted symbols. In case of the CDMA system having a variable load, i.e., a variable number of users at certain times, the number of possible groups of transmitted symbols which has to be processed by the means 12 can be reduced based on the knowledge of active users. All such measures for reducing the computational complexity of the means 12 for deriving candidate values are of special importance since the maximum likelihood sequence estimation involves a certain amount of computational complexity which, therefore, has to be reduced especially for low price applications.

The minimum selector 16 is operative to select the possible group of transmitted symbols having the smallest candidate value as the detected group of received symbols for MLSE with hard decision. Other preferred uses of the rotation dependent candidate values are explained below with reference to Fig. 16, 17 and 18.

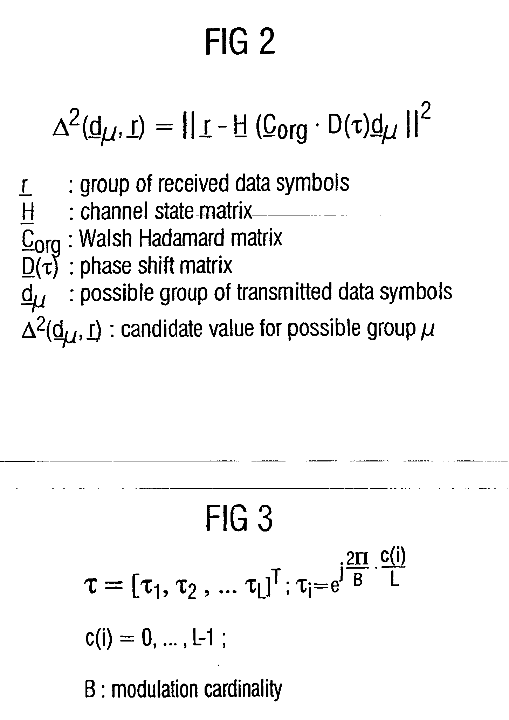

Fig. 2 shows the algorithm to be performed by the means 12 for deriving the candidate values. In particular, the equation in the top of Fig. 2 has to be calculated for each possible group of transmitted data symbols $\mathbf{d}_\mu$. As it is to be seen in Fig. 2, the rotational information denoted by a phase-shift matrix $D(\tau)$ are accounted for in the maximum likelihood sequence estimation. In particular, the phase shift matrix is a term in a multiplication so that it can be processed together with the vector $\mathbf{d}$ or the matrix $C_{org}$, which is the code matrix consisting of the spreading vectors for one "CDMA group".

It is to be noted here that the present invention is not limited to Walsh-Hadamard matrices. Instead, the present invention can also be used in connection with other substantially orthogonal code vectors such as any well-known pseudo noise sequences. Even not optimally orthogonal code vectors can be used in connection with the present invention as soon as the degree of orthogonality is sufficient for performing a maximum likelihood sequence estimation as defined by Fig. 2 resulting in a bit error rate, which is not above an admissible bit error rate at the receiver.

Normally, it is preferred to use a diagonal matrix H as a channel state matrix. One element in the channel state matrix is a complex value having a magnitude and a phase, the magnitude and the phase representing the influence of the channel on the sub-carrier to which the respective coefficient in the channel state matrix H is assigned to.

Fig. 3 shows a preferred distribution of phase information to different code vectors which is to be applied in the transmitter as well as the receiver. From the definition of $\tau_i$ it becomes clear that, when the system has $L = K_q = K_{max}$ users, the possible phase shift of $2\pi/B$ is distributed evenly among the code vectors. It is to be pointed out, however, that there may be other rotation distributions that might be of special importance for certain applications. Generally, however, the inventive detector is superior to a normal MLSE detector, when there is a phase difference having a certain value between at least two code vectors in the code matrix, as long as this phase difference is accounted for in the inventive detector.

As it is outlined in Fig. 3, the parameter B indicates the modulation cardinality of the constellation diagram used in a mapper at the transmitter. For a BPSK mapping, B = 2. For QPSK modulation, B = 4. For a 16-QAM mapping, B = 16. From the equation in Fig. 3 it is clear that phase shifts are applied to different code vectors which are between zero and a maximum phase shift value which is less than the phase shift by which two points in the constellation diagram are spaced apart.

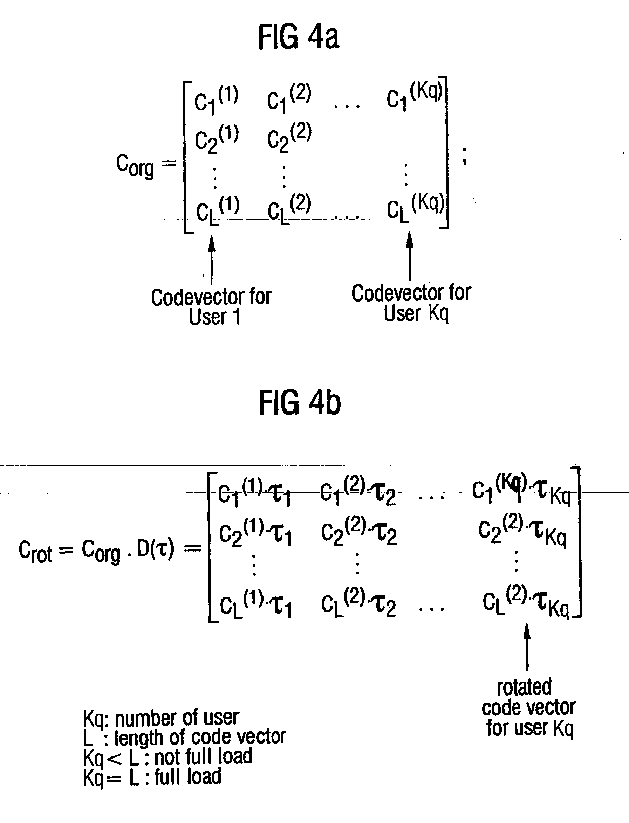

Fig. 4a indicates the code matrix having $K_q$ columns. Each column of the code matrix $C_{org}$ includes a number of L components, wherein the components in one column together form a code vector as produced for example by code vector generators such as a Walsh-Hadamard function generator. As it is shown in Fig. 4a, the first column is the code vector for user 1, while the last column is the code vector for user Kq. In case the system works under full load condition, Kq = L so that the code matrix $C_{org}$ is a quadratic matrix. In case, however, the system operates in a non-full load condition, matrix $C_{org}$ is a rectangular matrix having L lines and Kq columns wherein Kq is smaller than L, i.e., the maximum number of users.

Fig. 4b shows a rotated code matrix to be used in the means 12 for deriving in accordance with one embodiment of the present invention. Since the rotation matrix $D(\tau)$ is a diagonal matrix, the multiplication of $C_{org}$ and D results in a matrix having the same dimension as $C_{org}$. Additionally, it becomes clear from Fig. 4b that the same phase rotation is assigned to each component in one code vector, i.e., in one column of the matrix shown in Fig. 4b.

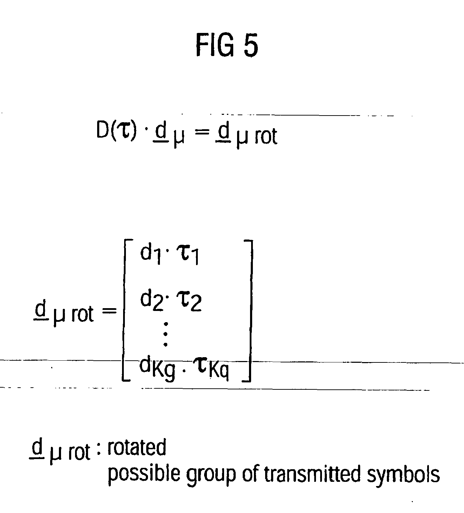

Alternatively, when the code matrix is not rotated by the phase rotation angles, in case it is desired to use the same code matrix as for state of the art MLSE detectors, the rotation information can also be accounted for by "impressing" the rotation information on the group of possible transmit symbols, which is indicated by the vector $\mathbf{d}_\mu$. Since the matrix $D(\tau)$ is a diagonal matrix, it becomes clear from Fig. 5 that the possible transmitted symbol $d_k$, i.e., the symbol d which has been spread by a certain code vector in the transmitter has assigned to it a certain phase rotation $\tau_k$.

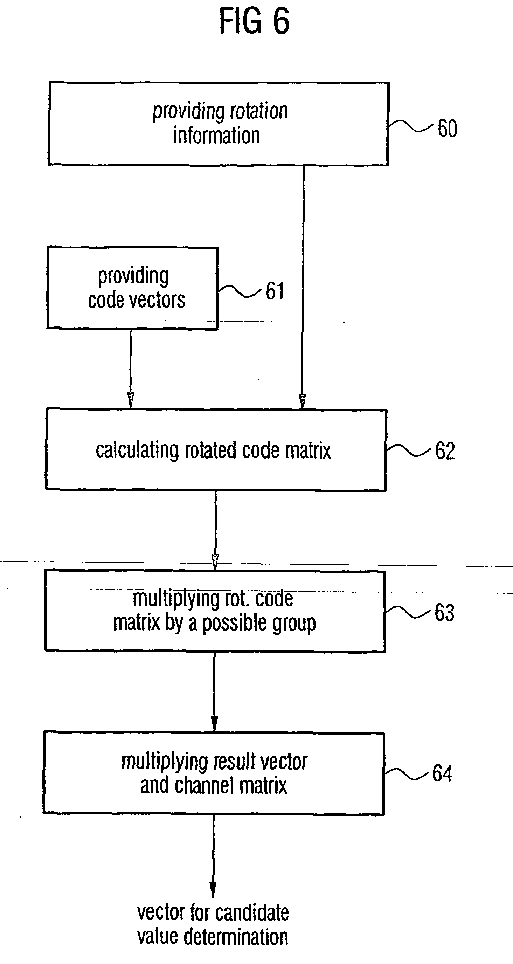

Fig. 6 shows a preferred sequence of steps to implement the case shown in Fig. 4b, in which the rotation information is "impressed" on the code matrix to obtain a rotated code matrix. To this end, the rotation information are provided in a step 60. In a step 61, code vectors are provided. In a step 62, the multiplication indicated in Fig. 4b is performed to obtain a rotated code matrix. Then, to implement the equation as shown in Fig. 2, the rotated code matrix is multiplied by a possible group $\mathbf{d}$ of transmitted symbols as it is indicated in step 63 in Fig. 6. Finally, the result obtained by step 63 is multiplied by the channel matrix H so that the value, i.e., the vector to be subtracted from the group of received data symbols indicated by $\mathbf{r}$ is obtained (step 64). Based on this vector and a vector $\mathbf{r}$ including the group of received data symbols, the candidate value determination can be performed e.g. based on Euclidian distances. It is to be outlined here that, however, other measures different from the Euclidian distance can be used for candidate value determination such as a higher power of the difference.

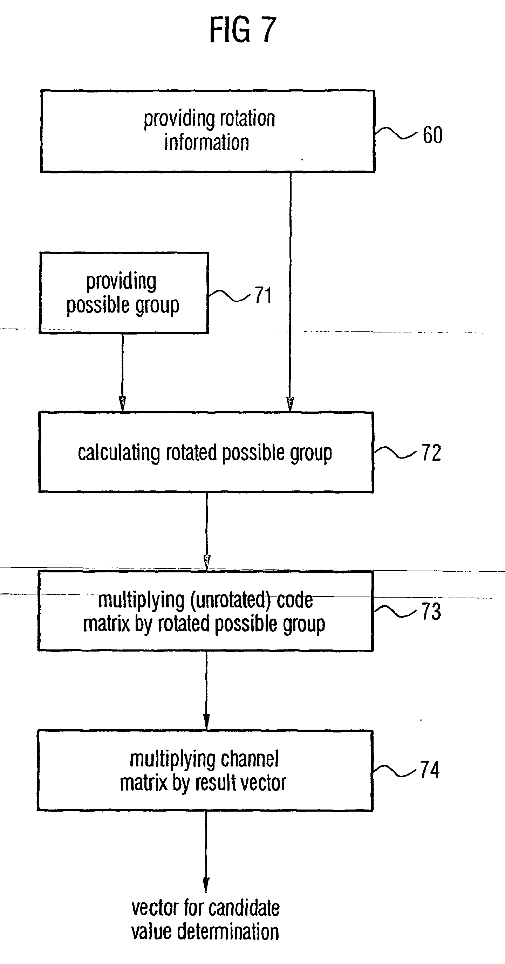

Alternatively, as has been outlined with respect to Fig. 5, the rotation information applied to code vectors at the transmitter can also be accounted for by multiplying the rotation matrix D and the vector $\mathbf{d}$ for candidate value determination. To this end, reference is made to Fig. 7. Again, the rotation information has to be provided in step 60. In a step 71, a possible group **d** is provided. Then, a rotated possible group is calculated in step 72. Then, the unrotated code matrix is multiplied by the rotated possible group obtained in steps 73 as it is indicated at step 73 in Fig. 7. The result from the multiplication in the step 73 is then multiplied by the channel matrix as it is indicated in step 74 of Fig. 7. Again, the vector for candidate value determination as defined in the equation in Fig. 2 is obtained so that a candidate value for the possible group provided in step 71 can be calculated.

Regarding the alternative in Fig. 6, it is to be noted here that this alternative is especially suited for a detector implementation having a memory, in which the rotated code matrix instead of the unrotated code matrix for the state of the art MLSE detector can be stored. Replacing the unrotated code matrix by the rotated code matrix is the only thing that has to be done to obtain the advantage of the up to 3dB reduced signal to noise ratio at the receiver for a certain bit error rate. No modifications to the inner core of an existing digital signal processor for example have to be performed. Therefore, already existing signal processors can be easily adapted to the inventive concept in that only the memory content of the memory having the code matrix is updated.

Alternatively, when it is not possible to update a code matrix memory, or when the code vectors are generated online by means of certain code vector generators, the inventive detector can easily be obtained by updating the memory, in which the possible groups of transmitted symbols are stored. To this end, only the memory for the possible groups has to be updated, and no further amendments to the digital signal processor are necessary.

In case the digital signal processor does not allow to store rotated code vectors or rotated possible groups such as when both are online generated by means of a certain function generator, the rotation information can also be acknowledged for during calculation of the candidate values by multiplying to the possible groups or to the code vectors. Since the rotation information are only phase information, efficient hard-wired phase shifters can be used.

It is to be noted here that there exist efficient ways to on line generate unrotated code vectors such as by the Walsh Hadamard transform. Therefore, it is preferred to "impress" the rotation information to the group of possible symbols or to the channel information or the use all multiplication terms without rotation and to account for the rotation during calculation of the candidate values for different groups of possible symbols.

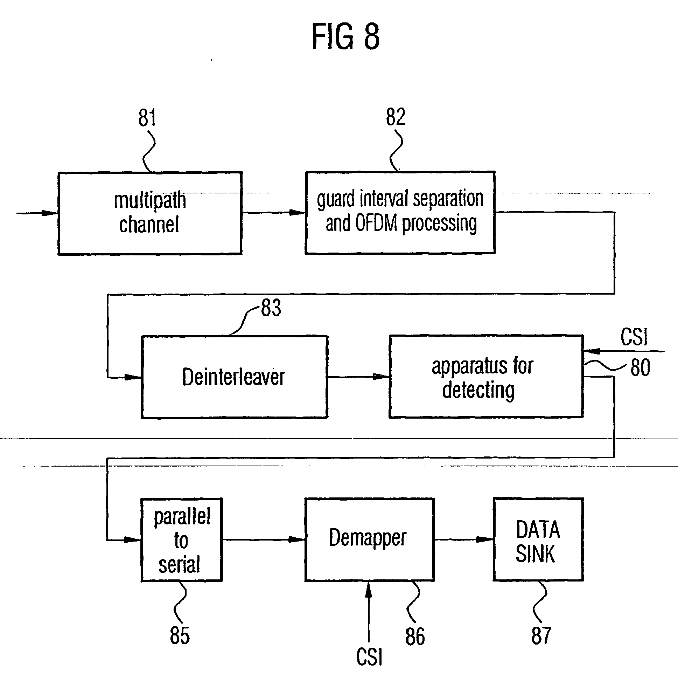

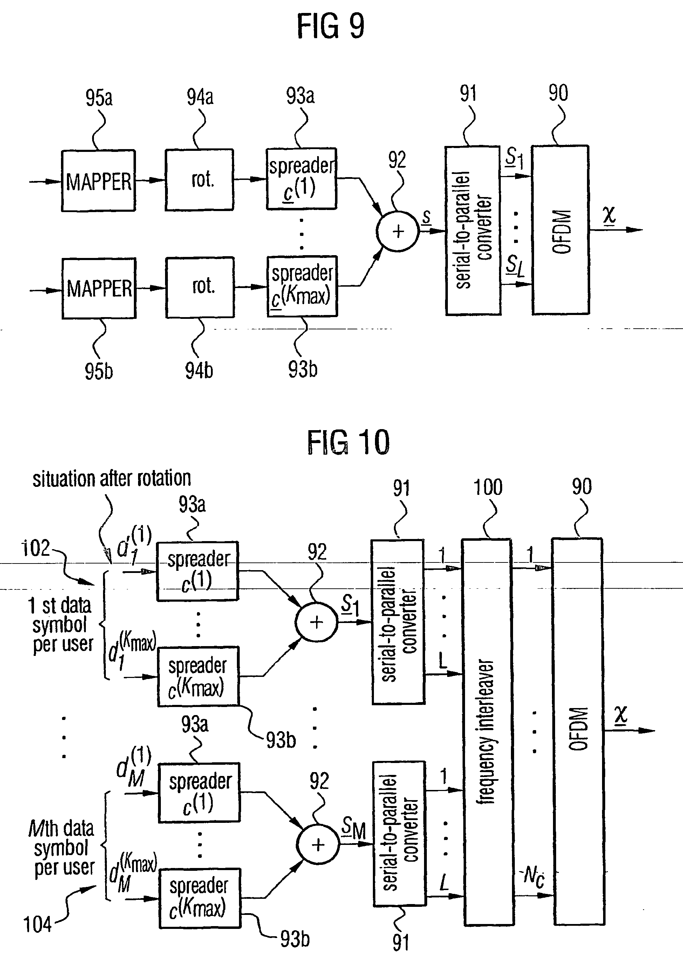

Before Fig. 8, which shows a preferred receiver setting, in which the inventive detector can be used, is explained in detail, several possible transmitter configurations in which a rotated transform can be applied are discussed in the following with respect to Figs. 9 to 12.

Fig. 9 shows a so-called basic MC-CDMA transmitter for example for a down link of a cellular radio system. $K_{max}$ is equal to L, and only $N_c = L$ sub-carriers are possible. In particular, Fig. 9 shows an OFDM modulator 90 connected to a serial-to-parallel converter 91. The serial-to-parallel converter is fed by the output of a summer 92, which sums chip-by-chip the outputs of several spreaders 93a, 93b. It has to be outlined here that only two spreaders are shown, which have two different code vectors $c^{(1)}$ and $c^{(Kmax)}$. Each spreader 93a, 93b is fed by a rotator placed before the spreader to rotate a symbol output by a mapper 95a or 95b. It is to be outlined here that the rotation can also be implemented by rotating the spreading vector c before applying the spreading vector to a symbol output by a mapper. In this case, the blocks 94a and 94b can be omitted, and the spreader blocks 93a, 93b have to apply rotated code vectors.

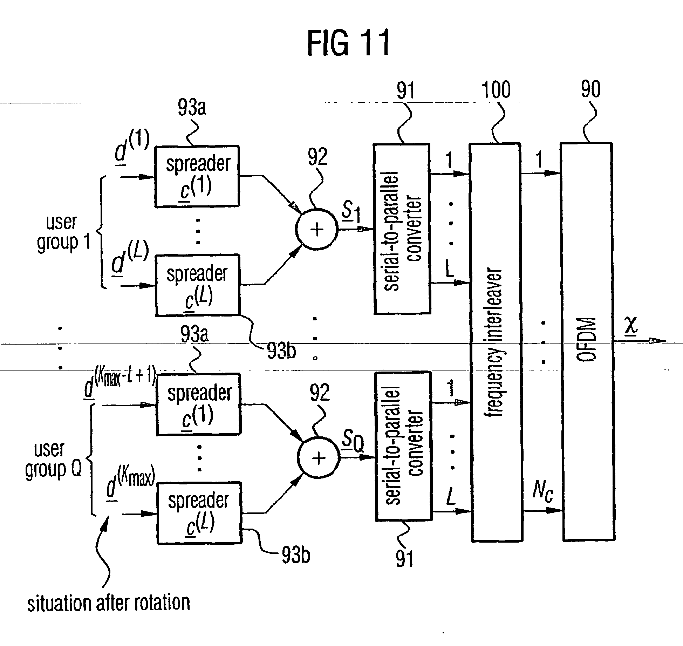

In the system in Fig. 9, the number of sub-carriers $N_c$ is upper bounded by $K_{max}$. To support large numbers of users while having a low receiver complexity and, furthermore, to use MC-CDMA systems with a sufficiently large number of sub-carriers to guarantee flat fading per sub-channel, modifications of the basic MC-CDMA system are preferred. In the following, appropriate modifications of the basic MC-CDMA system are discussed for a downlink of a mobile radio system. The downlink is chosen since the scenario enables better illustrations of the modifications than the uplink. It has to be mentioned, however, that these modifications are suitable in an uplink of an MC-CDMA mobile radio system. The three MC-CDMA system modifications discussed with respect to Fig. 10, 11 and 12 are referred to as M-modification, Q-modification and MQ-modification. The M-modification and the Q-modification are described so one can see that they are basic components of the MQ-modification. Since the M-modification and the Q-modification are independent from each other, they can be applied individually also.

Fig. 10 shows the M-modification of the basic MC-CDMA system of Fig. 9. A frequency interleaver 100 is connected before the OFDM block 90. Additionally, Fig. 10 contains several basic CDMA systems from Fig. 9, wherein one CDMA system from Fig. 9 is assigned to transmit the first data symbol of the first user, the first data symbol of the second user, the first data symbol of the third and so on. As it is indicated by 102 in Fig. 10, the other basic CDMA system of Fig. 9 is used to transmit for example the second data symbol of the first user, the second data symbol for the second user and so on. In Fig. 10, a CDMA basic system 104 is shown for transmitting the Mth data symbol of the first user, the Mth data symbol of the second user, the Mth data symbol of the third user and so on.

The intention of M-modification is to increase the number of sub-carriers while maintaining constant the spreading code length and the maximum number of active users. Consequently, the OFDM symbol duration increases and the relative loss of efficiency due to the guard interval decreases. Moreover, the tighter sub-carrier spacing enables one to guarantee flat fading per sub-channel in propagation scenarios with decreased coherence.

With the M-modification, each user transmits simultaneously M > 1 data symbols per OFDM symbol. The total number of sub-carriers of the modified MC-CDMA system is equal to the product of the parameter M and the parameter L. Each user, however, exploits the total $N_c$ sub-carriers for data transmission because of the frequency interleaver 100 shown in Fig. 10. As it has been outlined above, the data symbol index m is used to distinguish M simultaneously transmitted data symbols of the kth user. The number M is upper limited by the coherence time of the channel, since the symbol duration, which increases with increasing M has to be smaller than the coherence time of the channel to guarantee that the channel is time-invariant during one OFDM symbol duration.

For purposes of frequency diversity, the frequency interleaver 100 is used. Sub-carriers used for the transmission should have a spacing greater than the coherence time of the channel. Thus, the components of one sequence are affected independently, reducing the probability that the sequence output by one summer 92 is completely located in a deep fade. The interleaving is carried out prior to OFDM. The frequency interleaver can be a block interleaver which guarantees the maximum frequency separation between the components. However, due to a possible periodicity of the fading process in frequency, the block interleaver can fail if the periodicity is similar to the frequency separation between adjacent components. Therefore, a pseudo-random frequency interleaver or scrambler is preferred.

As it is indicated in Figs. 10, 11 and 12, the rotating blocks 94a, 94b and the mapping blocks 95a and 95b from Fig. 9 are omitted. Therefore, Figs. 10, 11 and 12 start at a situation in which the mapped symbols have already been rotated by rotating the group of transmitted symbols rather than the code matrix itself.

The purpose of the Q-modification shown in Fig. 11 is to reduce the receiver complexity by reducing the spreading code length per user, while maintaining constant the maximum number of active users and the number of sub-carriers. The complexity of an MC-CDMA receiver with single user detection increases with increasing spreading code length. In the case of multi-user detection, the complexity of an MC-CDMA receiver increases with both increasing spreading code length L and increasing number of active users K.

For performing joint detection with maximum likelihood sequence estimation, the number of simultaneously active users is preferred to be at a value of K less than 20 due to computational complexity reasons. Preferably, the number of simultaneously active users should even be less than 10. To keep the complexity of the receiver at an acceptable level by nevertheless allowing large numbers of active users, the Q-modification Fig. 11 is preferably used. The users are subdivided in Q independent user groups, where each user group exploits its own L sub-carriers within its sub-system. The Q-modification introduces an additional frequency division multiplexer component on sub-carrier level into the transmission scheme resulting in a hybrid MC-CDMA mobile radio system. A single sub-system is comparable to the basic MC-CDMA transmitter shown in Fig. 9. The number of active users in one sub-system is Kq, and the maximum number of active users is equal to L. The total number of simultaneously active users in the MC-CDMA system shown in Fig. 11 is equal to the product of Q and L. While maintaining the maximum number of supplied users constant, the required spreading code length decreases proportional to Q. This enables a significant reduction of the receiver complexity since in the receiver only the data symbols of the assigned sub-system have to be detected.

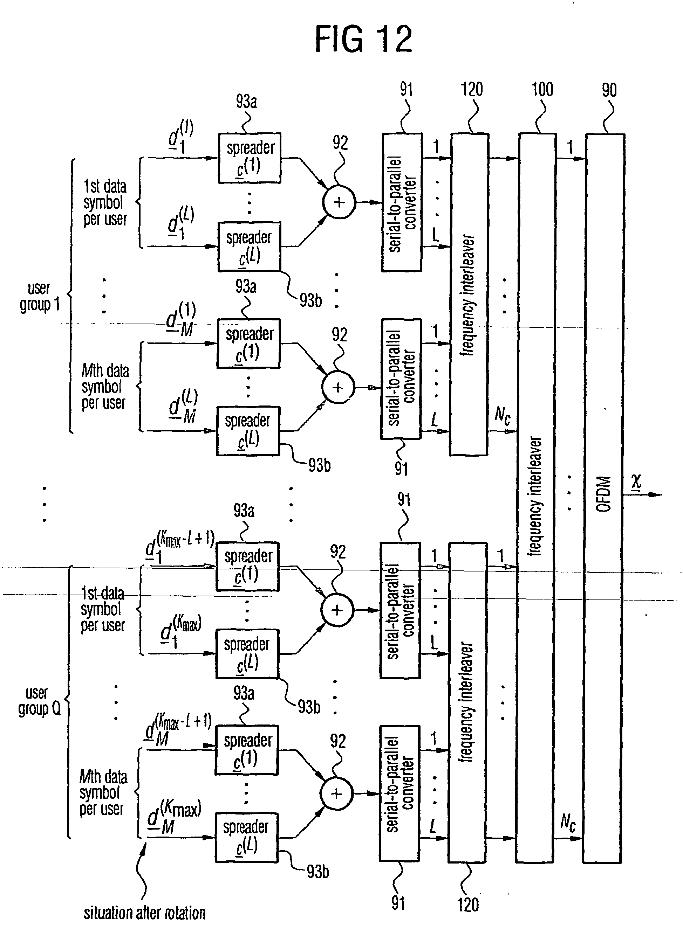

Fig. 12 shows the MQ-modification which is a combination of Figs. 10 and 11. Fig. 12, therefore, shows an MC-CDMA system with an adjustable number of sub-carriers and an adjustable receiver complexity, keeping constant the maximum number of active users. The transmission of M data symbols per user and, additionally, the splitting of the users in Q independent user groups results in a total number of sub-carriers used by the system in Fig. 12 equal to the product of Q, M and L. Each user only exploits a sub-set of ML sub-carriers for data transmission due to the FDMA component introduced by the Q-modification. Additionally, the double frequency interleaver scheme is to be noted. This means that there is a user group interleaver 120 for interleaving the carrier amplitudes for each user group. Then, the frequency interleaver 100 obtains an interleaving of the sub-carriers among the several user groups to obtain an optimum protection against deep fades.

In the following, reference is made to Fig. 8 to indicate a receiver setting, in which the inventive apparatus 80 can be used. First of all, there is shown a multi-path channel 81, at the output of which a received signal can be obtained. This received signal is processed by a block 81 for performing a guard interval separation and an OFDM processing. The output of the block 82 is input into a de-interleaver 83, which reverses any interleaving performed on the transmitter side. At the output of the deinterleaver 83, a group of received symbols is present. It has to be noted here that the received signal output by the transmission channel 81 is based on a transmitted signal. The transmitted signal is generated by a multi-channel modulation of a group of sub-channel values, wherein the group of sub-channel values is generated by means of a code division multiplex operation on a group of transmitted symbols. As it has been outlined above, the code division multiplex operation includes a weighting of the code sequence by a transmission symbol, wherein the code sequence or the transmitted symbol include different phase rotations for different CDMA channels.

In the following, a preferred implementation of the means 16 for determining in Fig. 1 is described. As shown in Fig. 15, the means 16 from Fig. 1 is implemented as a MLSE detector with hard decision (160), the hard decision being performed by a selector for selecting the possible sequence having the minimum candidate value or when the candidate values are defined appropriately the possible sequence having the maximum candidate value. The optimum detection technique exploits the maximum a posteriori (MAP) criterion or the maximum likelihood (ML) criterion, respectively and is based on joint detection. The inventive maximum likelihood sequence estimation (MLSE) optimally estimates the transmitted data sequence or a group of transmitted symbols d. The possible transmitted data symbol vectors are

$d_\mu, \mu = 1, \ldots, M_d^{K_q}$ , where $M_d^{Kq}$ is the number of possible transmitted data symbol vectors. The MLSE minimizes the sequence error probability, i.e., the data symbol vector error probability, which is equivalent to maximizing the conditional probability $p\{\underline{d}_\mu|\underline{r}\}$ that $\underline{d}_\mu$ was transmitted given a received signal **r**. The estimate for **d** obtained with the MAP criterion of sequence detection is calculated as follows:

$$\underline{\hat{d}} = \arg \max_{\underline{d}_\mu} P\{\underline{d}_\mu|\underline{r}\}$$

wherein arg denotes the argument of the function. By using Bayes' rule, the conditional probability $P\{\underline{d}_\mu|\underline{r}\}$ can be written as

$$P\{\underline{d}_\mu|\underline{r}\} = \frac{p(\underline{r}|\underline{d}_\mu)P\{\underline{d}_\mu\}}{p(\underline{r})}, \quad \mu = 1, \ldots, M_d^{K_q}.$$

When assuming that all vectors $\mathbf{d}_\mu$ are equally probable and by noting that the denominator in the above equation is independent of the transmitted data symbol vector, the decisions are all based on finding the sequence that maximizes $P\{\underline{d}_\mu|\underline{r}\}$. This is equivalent to finding the sequence that maximizes $p(\underline{r}|\underline{d}_\mu)$. This function is called the likelihood function. Maximizing this functions leads to the Maximum Likelihood criterion.

The conditional probability density function $p(\underline{r}|\underline{d}_\mu)$ of the received vector **r** given $\mathbf{d}_\mu$ is referred to as a likelihood function. With independent complex-valued white Gaussian noise on the sub-carriers, the elements of the received vector **r** are statistically independent and $p(\underline{r}|\underline{d}_\mu)$ can be expressed as outlined below.

$$p(\underline{r}|\underline{d}_\mu) = \left(\frac{1}{\pi\sigma^2}\right)^L \exp\left(-\frac{1}{\sigma^2}\left\|\underline{r} - \underline{H}\,\underline{C}_{rot}\,\underline{d}_\mu\right\|^2\right), \quad \mu = 1, \ldots, M_d^{K_q}$$

Since the reciprocal exponential function is a monotonously decreasing function, the maximum of $p(\underline{r}|\underline{d}_\mu)$, over $\underline{d}_\mu$ is equivalent to finding the data symbol vector $\mathbf{d}_\mu$ that minimizes the following squared Euclidian distance

$$\Delta^2(\underline{d}_\mu, \underline{r}) = \left\|\underline{r} - \underline{H}\,\underline{C}_{rot}\,\underline{d}_\mu\right\|^2, \quad \mu = 1, \ldots, M_d^{K_q},$$

between the received and all possible transmitted sequences.

The most likely transmitted data vector can be expressed as follows:

$$\underline{\hat{d}} = \arg \min_{\underline{d}_\mu} \Delta^2(\underline{d}_\mu, \underline{r})$$

The equation above therefore, indicates the functionality of the selector 160 in Fig. 15 and constitutes the hard decision criterion for obtaining a sequence or group of detected symbols.

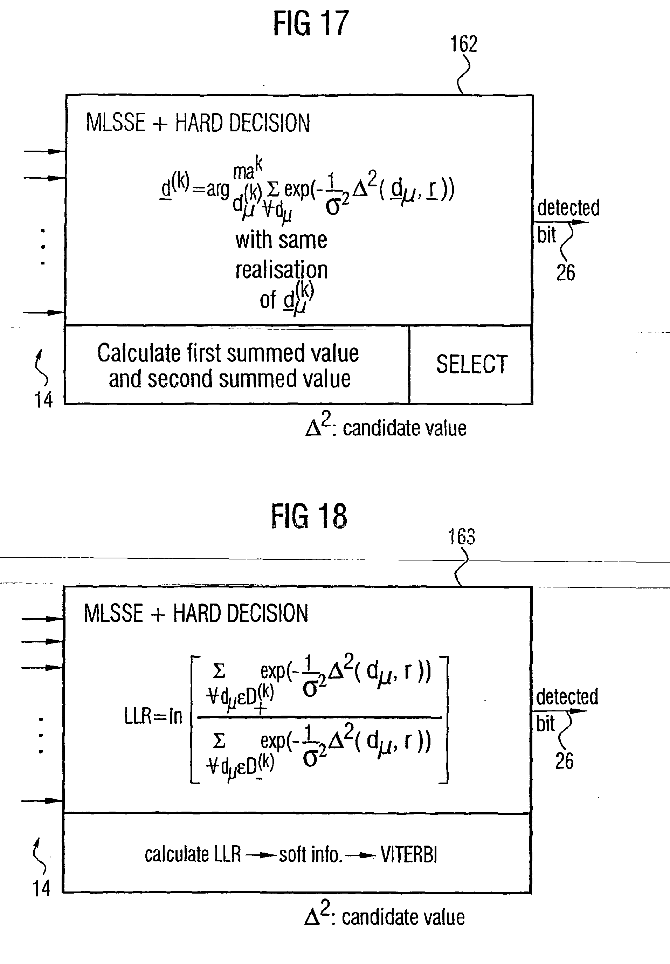

In the following, reference is made to Fig. 16 and Fig. 18 showing preferred implementations of the means 16 for determining as devices (161, 163) for calculating probability information of soft information and performing a soft decision. This soft decision can be used by any channel decoder such as the well-known Viterbi decoder to finally determine the detected symbols based on the soft information. Thus, the means (161, 163) for determining is operative to calculate a group of probability information for the group of transmitted symbols based on the candidate values for the different possible groups of transmitted symbols, and in which the means (161, 163) for determining is further operative to perform channel decoding based on the group of probability information to obtain the received symbols.

With regard to Fig. 16, there is illustrated a MLSE device for generating soft information rather than conducting a hard decision. A preferred format for this soft information is the log likelihood ratio LLR which is calculated by the equation shown in block 161. This equation constitutes an approximation for the LLR with MLSE, since MLSE does not provide reliability information on the detected code bits by itself. In particular, a first smallest candidate value for possible groups of transmitted symbols in which the symbol corresponding to a to be determined symbol has a first realization and a smallest second candidate value for possible groups of transmitted symbols in which the symbol corresponding to the to be determined symbol has a second realization are selected. Then, a difference between the first candidate value and the second candidate value is formed to obtain probability information for the to be detected symbol. In the equation in block 161, the indices $\mu_-$ and $\mu_+$ mark the smallest squared Euclidean distances $\Delta^2(\underline{d}_{\mu-},\underline{r})$ and $\Delta^2(\underline{d}_{\mu+},\underline{r})$ where the to be detected bit is +1 or -1, respectively.

When for example the second bit in a group of received symbols is to be determined, the candidate values for all possible groups of transmitted symbols, in which the second bit is plus one, are calculated to then select the first smallest candidate value from the obtained candidate values. The same is done for all possible groups of transmitted symbols, in which the second bit is minus one are calculated to then select the to obtain the second smallest candidate value from the obtained candidate The difference is then used as probability information for the second bit. This procedure is continued until there exist probability information for all bits in the group of received symbols.

Fig. 18 shows an MLSSE detector with soft decision. This device relies on the log likelihood ratios for the to be detected bits defined by the equation in the block 163. In particular, the means (163) for determining is operative to calculate probability information (LLR) for a to be detected symbol using the following preferred sequence of steps.

First of all, the candidate values $\Delta^2$ for possible groups of transmitted symbols in which the symbol corresponding to a to be determined symbol has a first realization (D$_+$) are weighted by $-1/\sigma^2$ and are summed to obtain a first summed value, which is the numerator of the equation.

Then, the candidate values $\Delta^2$ for possible groups of transmitted symbols in which the symbol corresponding to a to be determined symbol has a second realization (D$_-$) are weighted by $-1/\sigma^2$ and are summed to obtain a second summed value, which is the denominator of the equation.

To obtain the LLR, the natural logarithm of this quotient is calculated and serves as the probability information of the to be detected bit. It is to be noted that as stated above, the order of the to be detected bit in a sequence determines the order of the bit in a possible sequence in which this bit has the first or the second realization.

Fig. 17 shows MLSSE with hard decision. Here, the first summed value as described in connection with Fig. 18 and the second summed value are compared. Depending on the fact, whether the first or the seconds summed value is bigger, the to be detected bit is "hard" decided to have the same value as the realization, for which a higher summed value was obtained.

The detected data symbols are then, as it is outlined in Fig. 8, parallel to serial converted, de-mapped in a demapper 86 and provided to a data sink 87. At it is shown in Fig. 8, the demapper 86 can also be provided with channel state information in order to do a so-called soft demapping.

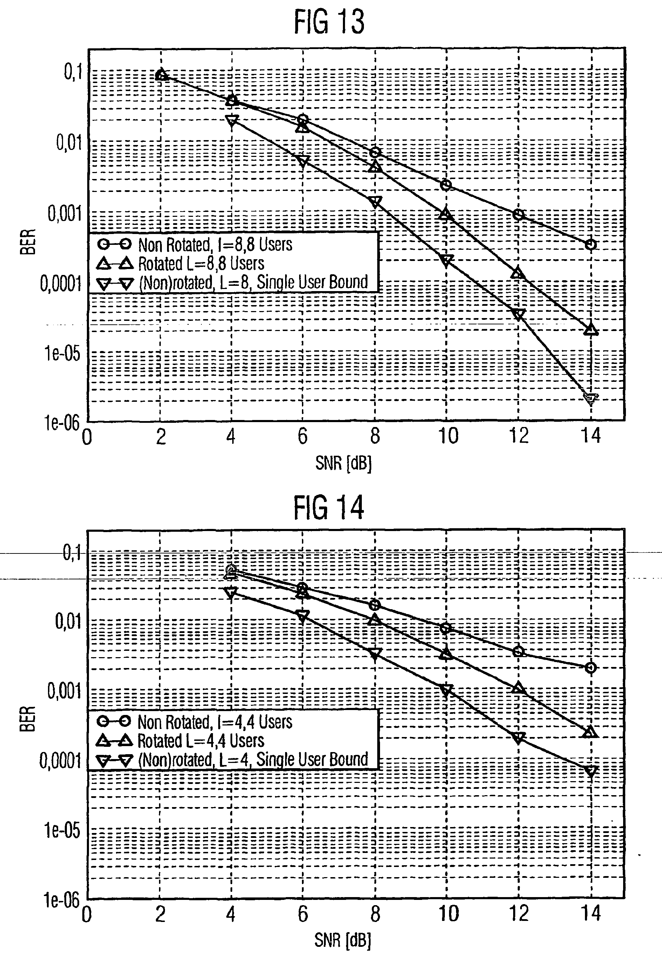

In the following, reference is made to Figs. 13 and 14 to show a comparison of the correlation between bit error rate and signal to noise ratio for several detector concepts. With circles, there is indicated the non-rotated case for an MLSE detector with a number L of eight users. The corresponding rotated case is indicated by upward triangles while the non-rotated single user bound for L = 8 users is shown by downward triangles. As the reference curve, the single user bound is used which is equal for rotated and non-rotated transforms. For a fully loaded system, the gain shows a significant improvement by about 2 dB at a bit error rate of 10$^{-3}$ for the inventive detector.

In Fig. 14, there is shown the same situation, i.e., the same three systems for a length L of the spreading codes of four and a maximum number of users $K_q$ of four. The improvement versus the non-rotated scheme in Fig. 14 is about 3 dB at a bit error rate of 2·10$^{-3}$. The loss against the single user bound is only about 2 dB and does not increase remarkably.

The inventive detection concept uses spreading sequences such as Walsh-Hadamard sequences to superpose signal parts of different users to exploit the diversity effect of having the same signal part of each user at a different time, frequency or space dimension. The multi-user detector especially profits from the phase rotations applied when transmitting the symbols. Therefore, performing a rotated transform is used for maximum likelihood sequence estimation and, in particular, for finding out of the minimum.

Since the rotational information contribute to the equation in Fig. 2, it becomes clear that the rotation information influences the Euclidian distances for a maximum likelihood sequence estimator so that the distances have larger differences for the different sequences. Thus, the minimum to be found by the selector becomes more prominent so that a more reliable sequence determination is obtained. The inventive use of the maximum likelihood sequence estimator in connection with a rotated transform enables the transmitter to exploit the more favourable distribution of the Euclidian distances of the superposed sequences. A single user detector is not capable to take advantages of this more favourable distributed Euclidian distances. However, the inventive multi-user detector exploits this feature and, therefore, detects the symbols more reliably than a system without having a rotation transform or without making use of the rotation transform at the receiver such as a single user detector.

In addition to the above outlined features, also a channel coder can be placed before the mapper in order to exploit the more favourable Euclidian distance by using soft-decision outputs in a multi-user detector. The inventive detection technique is applicable for every system that applies code division multiplex in the time, frequency or space domain. Thus, all kinds of multi-channel modulations are usable irrespective of the fact, that the channel is a time slot, a carrier or a channel defined by space.

Depending on certain implementation requirements, the inventive method of detecting a group of received symbols can be implemented in hardware or in software. The implementation can be performed using a digital storage medium, in particular a disk or a CD having electronically readable control signals, which can cooperate with a programmable computer system such that the inventive method is performed. Generally, the present invention is, therefore, a computer-program product with a program code stored on a machine readable carrier, the program code being for performing the inventive method, when the computer program product runs on a computer. In other words the inventive method is, therefore, a computer program having a program code for performing the inventive method, when the computer program runs on a computer.

**Claims**

1. Apparatus for detecting received symbols in a receiver using a group of received values, the received values being derived from a received signal using a multi-channel demodulation (82), the received signal being based on a transmitted signal originating from a transmitter, the transmitted signal being generated by a multi-channel modulation (90) of a group of sub-channel values, the group of sub-channel values being generated by means of a code division multiplex operation (92, 93a, 93b) performed on a group of transmitted symbols, the code division multiplex operation including a use of substantially orthogonal code sequences ($c^{(i)}$), wherein the code sequences or the transmitted symbols include different phase rotations for different code multiplex channels, comprising:

   means (18) for providing channel state information on a transmission channel extending between the transmitter and the receiver;
   **characterized by** means (12) for deriving a plurality of candidate values ($\Delta^2$), wherein a candidate value is based on a difference between the group of received values (r) and a vector dependent on a certain possible group of transmitted symbols ($d_\mu$, 20), the code sequences ($C_{org}$, 22), information ($D(\tau)$) on the phase rotations (24) and the channel state information (H) on the transmission channel, and wherein the means for deriving is operative to derive each candidate value of the plurality of candidate values using a different group of a plurality of possible groups of transmitted symbols ($d_\mu$); and
   means (16, 160, 161, 162, 163) for determining the received symbols corresponding to a most likely group of transmitted symbols based on the candidate values for the plurality of possible groups of transmitted symbols.

2. Apparatus in accordance with claim 1, in which the channel state information includes a channel state matrix having, as diagonal elements, complex values representing an influence of the transmission channel on sub-channels to which the diagonal elements in the channel state matrix are assigned to.

3. Apparatus in accordance with claim 1 or 2, is adapted to use the received signal in which the number of received symbols in the group of received values is smaller than a total number of sub-channels used in the multi-channel modulation.

4. Apparatus in accordance with claim 3, in which the total number of sub-channels is above 200 and the number of received symbols in the group of received values is below or equal to 32.

5. Apparatus in accordance with one of the preceding claims, in which the number of received data symbols in the group of received values is equal to a number of users in a user group, wherein the number of users is variable, wherein the apparatus further comprises means for obtaining information on an actual number of users and for selecting the possible groups of transmitted symbols in accordance with the actual number of users so that only possible groups of transmitted symbols are processed by the means (12) for deriving, which refer back to a number of users indicated by the actual number of users.

6. Apparatus in accordance with one of the preceding claims, wherein the means for deriving is operative to determine the vector by multiplying a matrix including the channel state information by a result vector, the result vector representing a multiplication of a code matrix having the code sequences, a matrix having the phase rotations and a possible group of transmitted symbols.

7. Apparatus in accordance with one of the preceding claims, in which the means for deriving is operative to determine an Euclidian distance for the difference.

8. Apparatus in accordance with one of the preceding claims, in which the multi-channel modulation is an OFDM modulation.

9. Apparatus in accordance with one of the preceding claims, in which the code sequences are Walsh-vectors, wherein the code sequences for the different code division multiplex channels form a Walsh-Hadamard-matrix, and in which the phase rotation applied to each Walsh vector is different from a phase rotation applied to another Walsh vector, wherein the apparatus comprises means for determining the difference of the different phase rotations by a rotation angle step size or a multiple thereof.

10. Apparatus in accordance with one of the preceding claims, in which the transmitted symbols represent a mapping of transmitted source bits onto states in a M-ary constellation diagram, the number M being greater than 2, the apparatus, further comprising a demapper for demapping the determined received symbols using the M-ary constellation diagram to obtain received source bits.

11. Apparatus in accordance with claim 10, in which amounts of the phase rotations depend on the number M.

12. Apparatus in accordance with one of the preceding claims, in which the multi-channel modulation is an OFDM modulation, having a number of $N_c$ sub-channels wherein the $N_c$ sub-channels are grouped into M·Q groups, wherein M equals a number of data symbols, which each user transmits in an OFDM symbol, wherein Q equals a number of user groups, wherein M is greater than or equal to 0, wherein Q is greater than or equal to 0, wherein the product of M and Q is not equal to 0, and wherein the number $N_c$ of sub-channels is equal to the product of M, Q and a number L of sub-channels, so that a data symbol of the M data symbols is spread over the number L of sub-channels only, the number L being equal to the length of a code sequence.

13. Apparatus in accordance with one of the preceding claims, in which each code sequence has a length, which is lower than or equal to 32.

14. Apparatus in accordance with one of the preceding claims, in which the multi-channel modulation is a multi-carrier modulation having sub-carriers, and the sub-channel values are amplitudes of the sub-carriers.

15. Apparatus in accordance with one of the preceding claims, in which the means (12) for deriving includes a memory for storing a rotated code matrix, the rotated code matrix having code sequences, wherein each code sequence being rotated by a different phase rotation.

16. Apparatus in accordance with one of claims 1 to 14, in which the means (12) for deriving includes a memory for storing rotated possible groups of transmitted symbols, wherein two symbols in a rotated possible group of transmitted symbols being rotated by different phase rotations.

17. Apparatus in accordance with one of claims 1 to 14, in which the means for deriving comprises a functional generator for generating code sequences, a functional generator for generating possible groups of transmitted symbols and a phase rotator for phase rotating a code sequence or a transmitted symbol in a possible group of transmitted symbols by a phase rotation determined by the information on the phase rotations.

18. Apparatus in accordance with one of the preceding claims, in which the means (160) for determining is operative to select the possible group of transmitted symbols having an extreme candidate value as the received symbols.

19. Apparatus in accordance with one of claims 1 to 17,
in which the means (161, 163) for determining is operative to calculate a group of probability information for the received symbols based on the candidate values for the different possible groups of transmitted symbols, and
in which the means (161, 163) for determining is further operative to perform channel decoding based on the group of probability information to obtain the received symbols.

20. Apparatus in accordance with claim 19,
in which the means (161) for determining is operative to calculate probability information for a received symbol by selecting a first smallest candidate value among candidate values for possible groups of transmitted symbols in which the symbol corresponding to the received symbol has a first realization and a second smallest candidate value among candidate values for possible groups of transmitted symbols in which the symbol corresponding to the received symbol has a second realization, and

by forming a difference between the first smallest candidate value and the second smallest candidate value to obtain probability information for the received symbol.

21. Apparatus in accordance with claim 19, in which the means (163) for determining is operative to calculate probability information for a received symbol

by summing exponentiated candidate values for possible groups of transmitted symbols in which the symbol corresponding to the received symbol has a first realization to obtain a first summed value,

by summing exponentiated candidate values for possible groups of transmitted symbols in which the symbol corresponding to the received symbol has a second realization to obtain a second summed value,

by forming a quotient between the first summed value and the second summed value, and

by forming a logarithm of the quotient to obtain the probability information for the received symbol.

22. Apparatus in accordance with one of claims 1 to 17, in which the means (162) for determining is operative to calculate a first summed value by summing the candidate values for possible groups of transmitted symbols in which the symbol corresponding to a received symbol has a first realization,

a second summed value by summing the candidate values for possible groups of transmitted symbols in which the symbol corresponding to the received symbol has a second realization, and

in which the means (162) for determining is further operative to select the realization for the received symbol yielding the highest summed value.

23. Method of detecting received symbols in a receiver using a group of received values, the received values being derived from a received signal using a multi-channel demodulation (82), the received signal being based on a transmitted signal originating from a transmitter, the transmitted signal being generated by a multi-channel modulation (90) of a group of sub-channel values, the group of sub-channel values being generated by means of a code division multiplex operation (92, 93a, 93b) performed on a group of transmitted symbols, the code division multiplex operation including a use of substantially orthogonal code sequences ($c^{(i)}$), wherein the code sequences or the transmitted symbols include different phase rotations for different code multiplex channels, comprising the following steps:

providing (18) channel state information on a transmission channel extending between the transmitter and the receiver;

**characterized by** deriving (12) a plurality of candidate values ($\Delta^2$), wherein a candidate value is based on a difference between the group of received values (r) and a vector dependent on a certain possible group of transmitted symbols ($d_\mu$, 20), the code sequences ($C_{org}$, 22), information ($D(\tau)$) on the phase rotations (24) and the channel state information (H) on the transmission channel, and wherein each candidate value of the plurality of candidate values is derived using a different group of a plurality of possible groups of transmitted symbols ($d_\mu$); and

determining (16, 160, 161, 162, 163) received symbols corresponding to a most likely group of transmitted symbols based on the candidate values for the plurality of possible groups of transmitted symbols.

24. Computer program having a program code for performing the method of detecting a group of received symbols in accordance with claim 23, when the program runs on a computer.

**Patentansprüche**

1. Vorrichtung zum Erfassen empfangener Symbole in einem Empfänger unter Verwendung einer Gruppe empfangener Werte, wobei die empfangenen Werte unter Verwendung einer Mehrkanal-Demodulation (82) von einem empfangenen Signal abgeleitet werden, wobei das empfangene Signal auf einem von einem Sender stammendem gesendeten Signal beruht, wobei das gesendete Signal durch eine Mehrkanal-Modulation (90) einer Gruppe von Unterkanalwerten erzeugt wird, wobei die Gruppe von Unterkanalwerten mittels einer Codemultiplex-Operation (92, 93a, 93b) erzeugt wird, die an einer Gruppe von gesendeten Symbolen durchgeführt wird, wobei die Codemultiplex-Operation eine Verwendung von im Wesentlichen orthogonalen Codesequenzen ($c^{(i)}$) umfasst, wobei die Codesequenzen oder die gesendeten Symbole unterschiedliche Phasendrehungen für unterschiedliche Codemultiplexkanäle umfassen, wobei die Vorrichtung folgende Merkmale aufweist:

eine Einrichtung (18) zum Bereitstellen von Kanalzustandsinformationen auf einem Sendekanal, der sich zwi-

**EP 1 602 192 B1**

schen dem Sender und dem Empfänger erstreckt;
**gekennzeichnet durch** eine Einrichtung (12) zum Ableiten einer Mehrzahl von in Frage kommenden Werten ($\Delta^2$), wobei ein in Frage kommender Wert auf einer Differenz zwischen der Gruppe von empfangenen Werten (r) und einem Vektor beruht, der von einer bestimmten möglichen Gruppe von gesendeten Symbolen ($d_\mu$, 20), den Codesequenzen ($C_{org}$, 22), Informationen ($D(\tau)$) über die Phasendrehungen (24) und den Kanalzustandsinformationen (H) über den Sendekanal abhängig ist, und wobei die Einrichtung zum Ableiten dahin gehend wirksam ist, jeden in Frage kommenden Wert der Mehrzahl von in Frage kommenden Werten unter Verwendung einer anderen Gruppe einer Mehrzahl möglicher Gruppen von gesendeten Symbolen ($d_\mu$) abzuleiten; und eine Einrichtung (16, 160, 161, 162, 163) zum Bestimmen der empfangenen Symbole, die einer wahrscheinlichsten Gruppe gesendeter Symbole auf der Basis der in Frage kommenden Werte für die Mehrzahl möglicher Gruppen von gesendeten Symbolen entsprechen.

2. Vorrichtung gemäß Anspruch 1, bei der die Kanalzustandsinformationen eine Kanalzustandsmatrix umfassen, die als diagonale Elemente komplexe Werte aufweist, die einen Einfluss des Sendekanals auf Unterkanäle, denen die diagonalen Elemente in der Kanalzustandsmatrix zugewiesen sind, darstellen.

3. Vorrichtung gemäß Anspruch 1 oder 2 ist dahin gehend angepasst, das empfangene Signal zu verwenden, bei der die Anzahl empfangener Symbole in der Gruppe von empfangenen Werten geringer ist als eine Gesamtanzahl von Unterkanälen, die bei der Mehrkanal-Modulation verwendet werden.

4. Vorrichtung gemäß Anspruch 3, bei der die Gesamtanzahl von Unterkanälen über 200 liegt und die Anzahl von empfangenen Symbolen in der Gruppe empfangener Werte weniger als oder gleich 32 beträgt.

5. Vorrichtung gemäß einem der vorhergehenden Ansprüche, bei der die Anzahl empfangener Datensymbole in der Gruppe empfangener Werte gleich einer Anzahl von Benutzern in einer Benutzergruppe ist, wobei die Anzahl von Benutzern variabel ist, wobei die Vorrichtung ferner eine Einrichtung zum Einholen von Informationen über eine tatsächliche Anzahl von Benutzern und zum Auswählen der möglichen Gruppen von gesendeten Symbolen gemäß der tatsächlichen Anzahl von Benutzern, so dass lediglich mögliche Gruppen von gesendeten Symbolen durch die Einrichtung (12) zum Ableiten verarbeitet werden, die sich auf eine Anzahl von Benutzern, die durch die tatsächliche Anzahl von Benutzern angegeben ist, rückbeziehen, umfasst.

6. Vorrichtung gemäß einem der vorhergehenden Ansprüche, bei der die Einrichtung zum Ableiten dahin gehend wirksam ist, den Vektor durch Multiplizieren einer Matrix, die die Kanalzustandsinformationen umfasst, mit einem Ergebnisvektor zu bestimmen, wobei der Ergebnisvektor eine Multiplikation einer Codematrix, die die Codesequenzen aufweist, einer Matrix, die die Phasendrehungen aufweist, und einer möglichen Gruppe gesendeter Symbole darstellt.

7. Vorrichtung gemäß einem der vorhergehenden Ansprüche, bei der die Einrichtung zum Ableiten dahin gehend wirksam ist, einen euklidischen Abstand für die Differenz zu bestimmen.

8. Vorrichtung gemäß einem der vorhergehenden Ansprüche, bei der die Mehrkanal-Modulation eine OFDM-Modulation ist.

9. Vorrichtung gemäß einem der vorhergehenden Ansprüche, bei der die Codesequenzen Walsh-Vektoren sind, wobei die Codesequenzen für die verschiedenen Codemultiplexkanäle eine Walsh-Hadamard-Matrix bilden, und bei der sich die an jeden Walsh-Vektor angelegte Phasendrehung von einer an einen anderen Walsh-Vektor angelegten Phasendrehung unterscheidet, wobei die Vorrichtung eine Einrichtung zum Bestimmen der Differenz der verschiedenen Phasendrehungen anhand einer Drehwinkel-Schrittgröße oder eines Vielfachen derselben umfasst.

10. Vorrichtung gemäß einem der vorhergehenden Ansprüche, bei der die gesendeten Symbole eine Abbildung von gesendeten Quellenbits auf Zustände in einem M-Konstellationsdiagramm darstellen, wobei die Anzahl M größer ist als 2, wobei die Vorrichtung ferner einen Rück-Mapper zum Rück-Mappen der ermittelten empfangenen Symbole unter Verwendung des M-Konstellationsdiagramms, um empfangene Quellenbits zu erhalten, umfasst.

11. Vorrichtung gemäß Anspruch 10, bei der Mengen der Phasendrehungen von der Anzahl M abhängen.

12. Vorrichtung gemäß einem der vorhergehenden Ansprüche, bei der die Mehrkanal-Modulation eine OFDM-Modulation ist, die eine Anzahl von $N_c$ Unterkanälen aufweist, wobei die $N_c$ Unterkanäle in M·Q Gruppen gruppiert sind, wobei M gleich einer Anzahl von Datensymbolen ist, die jeder Benutzer in einem OFDM-Symbol sendet, wobei Q einer Anzahl von Benutzergruppen gleicht, wobei M größer als oder gleich 0 ist, wobei Q größer als oder gleich 0 ist, wobei das Produkt von M und Q nicht gleich 0 ist, und wobei die Anzahl $N_c$ von Unterkanälen gleich dem Produkt von M, Q und einer Anzahl L von Unterkanälen ist, so dass ein Datensymbol der M Datensymbole lediglich über die Anzahl L von Unterkanälen verteilt wird, wobei die Anzahl L gleich der Länge einer Codesequenz ist.

13. Vorrichtung gemäß einem der vorhergehenden Ansprüche, bei der jede Codesequenz eine Länge aufweist, die geringer als oder gleich 32 ist.

14. Vorrichtung gemäß einem der vorhergehenden Ansprüche, bei der die Mehrkanal-Modulation eine Mehrträger-Modulation ist, die Unterträger aufweist, und die Unterkanalwerte Amplituden der Unterträger sind.

15. Vorrichtung gemäß einem der vorhergehenden Ansprüche, bei der die Einrichtung (12) zum Ableiten einen Speicher zum Speichern einer Gedrehter-Code-Matrix umfasst, wobei die Gedrehter-Code-Matrix Codesequenzen aufweist, wobei jede Codesequenz um eine unterschiedliche Phasendrehung gedreht wird.

16. Vorrichtung gemäß einem der Ansprüche 1 bis 14, bei der die Einrichtung (12) zum Ableiten einen Speicher zum Speichern gedrehter möglicher Gruppen gesendeter Symbole umfasst, wobei zwei Symbole in einer gedrehten möglichen Gruppe von gesendeten Symbolen um unterschiedliche Phasendrehungen gedreht werden.

17. Vorrichtung gemäß einem der Ansprüche 1 bis 14, bei der die Einrichtung zum Ableiten eine funktionstüchtige Erzeugungseinrichtung zum Erzeugen von Codesequenzen, eine funktionstüchtige Erzeugungseinrichtung zum Erzeugen möglicher Gruppen gesendeter Signale sowie eine Phasendreheinrichtung zum Phasendrehen einer Codesequenz oder eines gesendeten Symbols in einer möglichen Gruppe gesendeter Symbole um eine Phasendrehung, die durch die Informationen über die Phasendrehungen bestimmt wird, umfasst.

18. Vorrichtung gemäß einem der vorhergehenden Ansprüche, bei der die Einrichtung (160) zum Bestimmen dahin gehend wirksam ist, die mögliche Gruppe gesendeter Symbole, die einen extremen in Frage kommenden Wert aufweisen, als die empfangenen Symbole auszuwählen.

19. Vorrichtung gemäß einem der Ansprüche 1 bis 17,
bei der die Einrichtung (161, 163) zum Bestimmen dahin gehend wirksam ist, eine Gruppe von Wahrscheinlichkeitsinformationen für die empfangenen Symbole auf der Basis der in Frage kommenden Werte für die verschiedenen möglichen Gruppen gesendeter Symbole zu berechnen, und
bei der die Einrichtung (161, 163) zum Bestimmen ferner dahin gehend wirksam ist, auf der Basis der Gruppe von Wahrscheinlichkeitsinformationen eine Kanaldecodierung durchzuführen, um die empfangenen Symbole zu erhalten.

20. Vorrichtung gemäß Anspruch 19,
bei der die Einrichtung (161) zum Bestimmen dahin gehend wirksam ist, Wahrscheinlichkeitsinformationen für ein empfangenes Symbol zu berechnen,
indem sie einen ersten kleinsten in Frage kommenden Wert unter in Frage kommenden Werten für mögliche Gruppen gesendeter Symbole auswählt, bei dem das dem empfangenen Symbol entsprechende Symbol eine erste Verwirklichung aufweist, und einen zweiten kleinsten in Frage kommenden Wert unter in Frage kommenden Werten für mögliche Gruppen gesendeter Symbole auswählt, bei dem das dem empfangenen Symbol entsprechende Symbol eine zweite Verwirklichung aufweist, und
indem sie eine Differenz zwischen dem ersten kleinsten in Frage kommenden Wert und dem zweiten kleinsten in Frage kommenden Wert bildet, um Wahrscheinlichkeitsinformationen für das empfangene Symbol zu erhalten.

21. Vorrichtung gemäß Anspruch 19, bei der die Einrichtung (163) zum Bestimmen dahin gehend wirksam ist, Wahrscheinlichkeitsinformationen für ein empfangenes Symbol zu berechnen,
indem sie potenzierte in Frage kommende Werte für mögliche Gruppen gesendeter Symbole, bei denen das Symbol, das dem empfangenen Symbol entspricht, eine erste Verwirklichung aufweist, summiert, um einen ersten summierten Wert zu erhalten,
indem sie potenzierte in Frage kommende Werte für mögliche Gruppen gesendeter Symbole, bei denen das Symbol, das dem empfangenen Symbol entspricht, eine zweite Verwirklichung aufweist, summiert, um einen zweiten summierten Wert zu erhalten,
indem sie einen Quotienten zwischen dem ersten summierten Wert und dem zweiten summierten Wert bildet, und

indem sie einen Logarithmus des Quotienten bildet, um die Wahrscheinlichkeitsinformationen für das empfangene Symbol zu erhalten.

**22.** Vorrichtung gemäß einem der Ansprüche 1 bis 17, bei der die Einrichtung (162) zum Bestimmen dahin gehend wirksam ist, Folgendes zu berechnen:

einen ersten summierten Wert durch Summieren der in Frage kommenden Werte für mögliche Gruppen gesendeter Symbole, bei dem das einem empfangenen Symbol entsprechende Symbol eine erste Verwirklichung aufweist,

einen zweiten summierten Wert durch Summieren der in Frage kommenden Werte für mögliche Gruppen gesendeter Symbole, bei dem das einem empfangenen Symbol entsprechende Symbol eine zweite Verwirklichung aufweist, und

bei der die Einrichtung (162) zum Bestimmen ferner dahin gehend wirksam ist, die Verwirklichung für das empfangene Symbol, das den höchsten summierten Wert ergibt, auszuwählen.

**23.** Verfahren zum Erfassen empfangener Symbole in einem Empfänger unter Verwendung einer Gruppe empfangener Werte, wobei die empfangenen Werte unter Verwendung einer Mehrkanal-Demodulation (82) von einem empfangenen Signal abgeleitet werden, wobei das empfangene Signal auf einem von einem Sender stammendem gesendeten Signal beruht, wobei das gesendete Signal durch eine Mehrkanal-Modulation (90) einer Gruppe von Unterkanalwerten erzeugt wird, wobei die Gruppe von Unterkanalwerten mittels einer Codemultiplex-Operation (92, 93a, 93b) erzeugt wird, die an einer Gruppe von gesendeten Symbolen durchgeführt wird, wobei die Codemultiplex-Operation eine Verwendung von im Wesentlichen orthogonalen Codesequenzen ($c^{(i)}$) umfasst, wobei die Codesequenzen oder die gesendeten Symbole unterschiedliche Phasendrehungen für unterschiedliche Codemultiplexkanäle umfassen, wobei das Verfahren folgende Schritte aufweist:

Bereitstellen (18) von Kanalzustandsinformationen auf einem Sendekanal, der sich zwischen dem Sender und dem Empfänger erstreckt;

**gekennzeichnet durch** ein Ableiten (12) einer Mehrzahl von in Frage kommenden Werten ($\Delta^2$), wobei ein in Frage kommender Wert auf einer Differenz zwischen der Gruppe von empfangenen Werten (r) und einem Vektor beruht, der von einer bestimmten möglichen Gruppe von gesendeten Symbolen ($d_\mu$, 20), den Codesequenzen ($C_{org}$, 22), Informationen ($D(\tau)$) über die Phasendrehungen (24) und den Kanalzustandsinformationen (H) über den Sendekanal abhängig ist, und wobei jeder in Frage kommende Wert der Mehrzahl von in Frage kommenden Werten unter Verwendung einer anderen Gruppe einer Mehrzahl möglicher Gruppen von gesendeten Symbolen ($d_\mu$) abgeleitet wird; und

Bestimmen (16, 160, 161, 162, 163) empfangener Symbole, die einer wahrscheinlichsten Gruppe gesendeter Symbole auf der Basis der in Frage kommenden Werte für die Mehrzahl möglicher Gruppen von gesendeten Symbolen entsprechen.

**24.** Computerprogramm, das einen Programmcode zum Durchführen des Verfahrens zum Erfassen einer Gruppe empfangener Symbole gemäß Anspruch 23 aufweist, wenn das Programm auf einem Computer abläuft.

**Revendications**

**1.** Appareil de détection des symboles reçus dans un récepteur à l'aide d'un groupe de valeurs reçues, les valeurs reçues étant dérivées d'un signal reçu à l'aide d'une démodulation à canaux multiples (82), le signal reçu étant basé sur un signal transmis provenant d'un émetteur, le signal transmis étant généré par une modulation à canaux multiples (90) d'un groupe de valeurs de sous-canal, le groupe de valeurs de sous-canal étant généré au moyen d'une opération de multiplexage par répartition de code (92, 93a, 93b) effectuée sur un groupe de symboles transmis, l'opération de multiplexage par répartition de code comportant une utilisation de séquences de codes sensiblement orthogonales ($c^{(i)}$), où les séquences de codes ou les symboles transmis comportent différentes rotations de phase pour différents canaux à codes multiples, comprenant:

un moyen (18) destiné à fournir des informations d'état de canal sur un canal de transmission s'étendant entre l'émetteur et le récepteur ;

**caractérisé par** un moyen (12) destiné à dériver une pluralité des valeurs candidates ($\Delta^2$), où une valeur candidate est basée sur une différence entre le groupe de valeurs reçues (r) et un vecteur fonction d'un certain groupe possible de symboles transmis ($d_\mu$, 20), des séquences de codes ($C_{org}$, 22), des informations ($D(\tau)$)

sur les rotations de phase (24) et des informations d'état de canal (H) sur le canal de transmission, et dans lequel le moyen destiné à dériver est opérationnel pour dériver chaque valeur candidate de la pluralité de valeurs candidates à l'aide d'un groupe différent parmi une pluralité de possibles groupes de symboles transmis ($d_\mu$) ; et un moyen (16, 160, 161, 162, 163) destiné à déterminer les symboles reçus correspondant à un groupe le plus probable de symboles transmis sur base des valeurs candidates pour la pluralité de possibles groupes de symboles transmis.

2. Appareil selon la revendication 1, dans lequel les informations d'état de canal comportent une matrice d'état de canal ayant, comme éléments diagonaux, des valeurs complexes représentant une influence du canal de transmission sur les sous-canaux auxquels sont associés les éléments diagonaux dans la matrice d'état de canal.

3. Appareil selon la revendication 1 ou 2, qui est adapté pour utiliser le signal reçu dans lequel le nombre de symboles reçus dans le groupe de valeurs reçues est inférieur à un nombre total de sous-canaux utilisés dans la modulation à canaux multiples.

4. Appareil selon la revendication 3, dans lequel le nombre total de sous-canaux est supérieur à 200 et le nombre de symboles reçus dans le groupe de valeurs reçues est inférieur ou égal à 32.

5. Appareil selon l'une des revendications précédentes, dans lequel le nombre de symboles de données reçus dans le groupe de valeurs reçues est égal à un nombre d'utilisateurs dans un groupe d'utilisateurs, où le nombre d'utilisateurs est variable, dans lequel l'appareil comprend, par ailleurs, un moyen destiné à obtenir des informations sur un nombre réel d'utilisateurs et à sélectionner les possibles groupes de symboles transmis selon le nombre réel d'utilisateurs, de sorte que seuls les possibles groupes de symboles transmis soient traités par le moyen (12) destiné à dériver, lesquels se réfèrent à un nombre d'utilisateurs indiqué par le nombre réel d'utilisateurs.

6. Appareil selon l'une des revendications précédentes, dans lequel le moyen destiné à dériver est opérationnel pour déterminer le vecteur en multipliant une matrice comportant les informations d'état de canal par un vecteur de résultat, le vecteur de résultat représentant une multiplication d'un matrice de codes présentant les séquences de codes, une matrice présentant les rotations de phase et un possible groupe de symboles transmis.

7. Appareil selon l'une des revendications précédentes, dans lequel le moyen destiné à dériver est opérationnel pour déterminer une distance euclidienne pour la différence.

8. Appareil selon l'une des revendications précédentes, dans lequel la modulation à canaux multiples est une modulation OFDM.

9. Appareil selon l'une des revendications précédentes, dans lequel les séquences de codes sont des vecteurs de Walsh, où les séquences de codes pour les différents canaux à multiplexage par répartition de code forment une matrice de Walsh-Hadamard, et dans lequel la rotation de phase appliquée à chaque vecteur de Walsh est différente d'une rotation de phase appliquée à un autre vecteur de Walsh, dans lequel l'appareil comprend un moyen destiné à déterminer la différence des différentes rotations de phase par une grandeur d'étape d'angle de rotation ou un multiple de celle-ci.

10. Appareil selon l'une des revendications précédentes, dans lequel les symboles transmis représentent un mappage de bits de source transmis à des états dans un diagramme de constellation M-aire, le nombre M étant supérieur à 2, l'appareil comprenant, par ailleurs, un dispositif de démappage destiné à démapper les symboles reçus déterminés à l'aide du diagramme de constellation M-aire, pour obtenir les bits de source reçus.

11. Appareil selon la revendication 10, dans lequel les quantités des rotations de phase dépendent du nombre M.

12. Appareil selon l'une des revendications précédentes, dans lequel la modulation à canaux multiples est une modulation OFDM, ayant un nombre $N_c$ de sous-canaux, où les $N_c$ sous-canaux sont regroupés en $M \cdot Q$ groupes, où M est égal à un nombre de symboles de données que chaque utilisateur transmet dans un symbole OFDM, où Q est égal à un nombre de groupes d'utilisateurs, où M est supérieur ou égal à 0, où Q est supérieur ou égal à 0, où le produit de M et Q n'est pas égal à 0, et où le nombre $N_c$ de sous-canaux est égal au produit de M, Q et d'un nombre L de sous-canaux, de sorte qu'un symbole de données des M symboles de données soit réparti uniquement sur le nombre L de sous-canaux, le nombre L étant égal à la longueur d'une séquence de codes.

**13.** Appareil selon l'une des revendications précédentes, dans lequel chaque séquence de codes a une longueur qui est inférieure ou égale à 32.

**14.** Appareil selon l'une des revendications précédentes, dans lequel la modulation de canaux multiples est une modulation de porteuses multiples ayant des sous-porteuses, et les valeurs de sous-canal sont des amplitudes des sous-porteuses.

**15.** Appareil selon l'une des revendications précédentes, dans lequel le moyen (12) destiné à dériver comporte une mémoire destinée à mémoriser une matrice de codes tournée, la matrice de codes tournée présentant des séquences de codes, où chaque séquence de codes est tournée d'une rotation de phase différente.

**16.** Appareil selon l'une des revendications 1 à 14, dans lequel le moyen (12) destiné à dériver comporte une mémoire destinée à mémoriser les possibles groupes tournés de symboles transmis, où deux symboles dans un possible groupe tourné des symboles transmis sont tournés de rotations de phase différentes.

**17.** Appareil selon l'une des revendications 1 à 14, dans lequel le moyen destiné à dériver comprend un générateur fonctionnel destiné à générer des séquences de codes, un générateur fonctionnel destiné à générer de possibles groupes de symboles transmis et un rotateur de phase destiné à effectuer une rotation de phase d'une séquence de codes ou d'un symbole transmis dans un possible groupe de symboles transmis d'une rotation de phase déterminée par les informations sur la rotation de phase.

**18.** Appareil selon l'une des revendications précédentes, dans lequel le moyen (160) destiné à déterminer est opérationnel pour sélectionner le possible groupe de symboles transmis ayant une valeur candidate extrême comme symboles reçus.

**19.** Appareil selon l'une de revendications 1 à 17,
dans lequel le moyen (161, 163) destiné à déterminer est opérationnel pour calculer un groupe d'informations de probabilité pour les symboles reçus sur base des valeurs candidates pour les différents groupes possibles de symboles transmis, et
dans lequel le moyen (161, 163) destiné à déterminer est, par ailleurs, opérationnel pour effectuer le décodage de canal sur base du groupe d'informations de probabilité, pour obtenir les symboles reçus.

**20.** Appareil selon la revendication 19,
dans lequel le moyen (161) destiné à déterminer est opérationnel pour calculer les informations de probabilité pour un symbole reçu
en sélectionnant une première valeur candidate la plus petite parmi les valeurs candidates pour les possibles groupes de symboles transmis dans laquelle le symbole correspondant aux symbole reçu a une première réalisation et une deuxième valeur candidate la plus petite parmi les valeurs candidates pour les possibles groupes de symboles transmis dans laquelle le symbole correspondant au symbole reçu a une deuxième réalisation, et
en formant une différence entre la première valeur candidate la plus petite et la deuxième valeur candidate la plus petite, pour obtenir les informations de probabilité pour le symbole reçu.

**21.** Appareil selon la revendication 19, dans lequel le moyen (163) destiné à déterminer est opérationnel pour calculer les informations de probabilité pour un symbole reçu
en additionnant les valeurs de candidat élevées à une puissance pour les possibles groupes de symboles transmis dans lesquels le symbole correspondant au symbole reçu a une première réalisation, pour obtenir une première valeur additionnée,
en additionnant les valeurs de candidat élevées à une puissance pour les possibles groupes de symboles transmis dans lesquels le symbole correspondant au symbole reçu a une deuxième réalisation, pour obtenir une deuxième valeur additionnée,
en formant un quotient entre la première valeur additionnée et la deuxième valeur additionnée, et
en formant un logarithme du quotient, pour obtenir les informations de probabilité pour le symbole reçu.

**22.** Appareil selon l'une des revendications 1 à 17, dans lequel le moyen (162) destiné à déterminer est opérationnel pour calculer
une première valeur additionnée en additionnant les valeurs candidates pour les possibles groupes de symboles transmis dans lesquels le symbole correspondant à un symbole reçu a une première réalisation,
une deuxième valeur additionnée en additionnant les valeurs candidates pour les possibles groupes de symboles transmis dans lesquels le symbole correspondant au symbole reçu a une deuxième réalisation, et dans lequel le moyen (162) destiné à déterminer est, par ailleurs, opérationnel pour sélectionner la réalisation pour le symbole reçu donnant la valeur additionnée la plus élevée.

**23.** Procédé de détection de symboles reçus dans un récepteur à l'aide d'un groupe de valeurs reçues, les valeurs reçues étant dérivées d'un signal reçu à l'aide d'une démodulation à canaux multiples (82), le signal reçu étant basé sur un signal transmis provenant d'un émetteur, le signal transmis étant généré par une modulation à canaux multiples (90) d'un groupe de valeurs de sous-canal, le groupe de valeurs de sous-canal étant généré au moyen d'une opération de multiplexage par répartition de code (92, 93a, 93b) effectuée sur un groupe de symboles transmis, l'opération de multiplexage par répartition de code comportant une utilisation de séquences de codes sensiblement orthogonales ($c^{(i)}$), où les séquences de codes ou les symboles transmis comportent différentes rotations de phase pour différents canaux à codes multiples, comprenant les étapes suivantes consistant à :

fournir (18) des informations d'état de canal sur un canal de transmission s'étendant entre l'émetteur et le récepteur ;
**caractérisé par** la dérivation (12) d'une pluralité de valeurs candidates ($\Delta^2$), où une valeur candidate est basée sur une différence entre le groupe de valeurs reçues (r) et un vecteur fonction d'un certain groupe possible de symboles transmis ($d_\mu$, 20), des séquences de codes ($C_{org}$, 22), des informations ($D(\tau)$) sur les rotations de phase (24) et des informations d'état de canal (H) sur le canal de transmission, et dans lequel chaque valeur candidate de la pluralité de valeurs candidates est dérivée à l'aide d'un groupe différent parmi une pluralité de possibles groupes de symboles transmis ($d_\mu$) ; et
déterminer (16, 160, 161, 162, 163) les symboles reçus correspondant à un groupe le plus probable de symboles transmis sur base des valeurs candidates pour la pluralité de possibles groupes de symboles transmis.

**24.** Programme d'ordinateur présentant un code de programme pour exécuter le procédé de détection d'un groupe de symboles reçus selon la revendication 23 lorsque le programme se déroule sur un ordinateur.

# FIG 1

# FIG 2

$$\Delta^2(\underline{d}_\mu, \underline{r}) = \| \underline{r} - \underline{H} (\underline{C}_{org} \cdot D(\tau)\underline{d}_\mu \|^2$$

$\underline{r}$ : group of received data symbols

$\underline{H}$ : channel state matrix

$\underline{C}_{org}$ : Walsh Hadamard matrix

$\underline{D}(\tau)$ : phase shift matrix

$\underline{d}_\mu$ : possible group of transmitted data symbols

$\Delta^2(\underline{d}_\mu, \underline{r})$ : candidate value for possible group $\mu$

# FIG 3

$$\tau = [\tau_1, \tau_2, \dots \tau_L]^T ; \tau_i = e^{j\frac{2\Pi}{B} \cdot \frac{c(i)}{L}}$$

$$c(i) = 0, \dots, L\text{-}1 ;$$

B : modulation cardinality

# FIG 4a

$$C_{org} = \begin{bmatrix} c_1^{(1)} & c_1^{(2)} & \cdots & c_1^{(Kq)} \\ c_2^{(1)} & c_2^{(2)} & & \\ \vdots & \vdots & & \vdots \\ c_L^{(1)} & c_L^{(2)} & \cdots & c_L^{(Kq)} \end{bmatrix} ;$$

Codevector for
User 1

Codevector for
User Kq

# FIG 4b

$$C_{rot} = C_{org} \cdot D(\tau) = \begin{bmatrix} c_1^{(1)} \cdot \tau_1 & c_1^{(2)} \cdot \tau_2 & \cdots & c_1^{(Kq)} \cdot \tau_{Kq} \\ c_2^{(1)} \cdot \tau_1 & c_2^{(2)} \cdot \tau_2 & & c_2^{(2)} \cdot \tau_{Kq} \\ \vdots & \vdots & & \vdots \\ c_L^{(1)} \cdot \tau_1 & c_L^{(2)} \cdot \tau_2 & \cdots & c_L^{(2)} \cdot \tau_{Kq} \end{bmatrix}$$

rotated
code vector
for user Kq

Kq: number of user
L : length of code vector
Kq < L : not full load
Kq = L : full load

# FIG 5

$$D(\tau) \cdot \underline{d}_\mu = \underline{d}_{\mu\,rot}$$

$$\underline{d}_{\mu\,rot} = \begin{bmatrix} d_1 \cdot \tau_1 \\ d_2 \cdot \tau_2 \\ \vdots \\ d_{Kg} \cdot \tau_{Kq} \end{bmatrix}$$

$\underline{d}_{\mu\,rot}$ : rotated
possible group of transmitted symbols

# FIG 6

```
┌─────────────────────────┐
│   providing rotation    │ ～ 60
│      information        │
└─────────────────────────┘


┌──────────────┐
│  providing   │ ～ 61
│ code vectors │
└──────────────┘


┌─────────────────────────┐
│ calculating rotated code matrix │ ～ 62
└─────────────────────────┘


┌─────────────────────────┐
│   multiplying rot. code  │ ～ 63
│ matrix by a possible group │
└─────────────────────────┘


┌─────────────────────────┐
│   multiplying result vector  │ ～ 64
│    and channel matrix    │
└─────────────────────────┘


        vector for candidate
        value determination
```

# FIG 7

```
┌─────────────────────────────┐
│     providing rotation      │  ～60
│        information          │
└─────────────────────────────┘

┌──────────────────┐
│    providing     │  ～71
│  possible group  │
└──────────────────┘

┌─────────────────────────────┐
│ calculating rotated possible group │  ～72
└─────────────────────────────┘

┌─────────────────────────────┐
│   multiplying (unrotated) code   │  ～73
│  matrix by rotated possible group │
└─────────────────────────────┘

┌─────────────────────────────┐
│     multiplying channel     │  ～74
│    matrix by result vector  │
└─────────────────────────────┘

       vector for candidate
       value determination
```

# FIG 8

81

82

multipath channel

guard interval separation and OFDM processing

83

Deinterleaver

apparatus for detecting

CSI

80

parallel to serial

Demapper

DATA SINK

85

86

87

CSI

# FIG 9

# FIG 10

# FIG 11

situation after rotation

# FIG 12

situation after rotation

## FIG 13

BER vs SNR [dB]

O—O Non Rotated, I=8,8 Users
△—△ Rotated L=8,8 Users
▽—▽ (Non)rotated, L=8, Single User Bound

## FIG 14

BER vs SNR [dB]

O—O Non Rotated, I=4,4 Users
△—△ Rotated L=4,4 Users
▽—▽ (Non)rotated, L=4, Single User Bound

# FIG 15

160

MLSE + HARD DECISION

for selecting the possible
group of transmitted
symbols having the minimum
cand. value

14

26

group of
detected
symbols

from 20 in Fig. 1

# FIG 16

161

MLSE + SOFT DECISION

$$LLR^{(i)} = \frac{1}{\Theta^2} (\Delta^2(\underline{d}_{\mu_-}, r) - \Delta^2(\underline{d}_{\mu_+}, r))$$

⇓

sequenz of probability information (soft info)

⇓

channel decoder (e.g. VITERBI)

14

26

$\Delta^2$: candidate value

$\mu_-, \mu_+$ smallest candidate values
(e.g. Enclidian distances)
where respective bit i is -1 and +1,respectively,
where i is the nummber of the bit in the group of
possible transmitted symbols.

# FIG 17

162

MLSSE + HARD DECISION

$$\underline{d}^{(k)} = \arg \max_{d_{\mu}^{(k)}} \sum_{\forall d_{\mu}} \exp(-\frac{1}{\sigma^2} \Delta^2(\underline{d}_{\mu}, \underline{r}))$$

with same
realisation
of $\underline{d}_{\mu}^{(k)}$

detected
bit

26

| Calculate first summed value and second summed value | SELECT |

14

$\Delta^2$: candidate value

# FIG 18

163

MLSSE + HARD DECISION

$$LLR = \ln \left[ \frac{\sum_{\forall d_{\mu} \varepsilon D_{+}^{(k)}} \exp(-\frac{1}{\sigma^2} \Delta^2(d_{\mu}, r))}{\sum_{\forall d_{\mu} \varepsilon D_{-}^{(k)}} \exp(-\frac{1}{\sigma^2} \Delta^2(d_{\mu}, r))} \right]$$

detected
bit

26

calculate LLR ⟶ soft info. ⟶ VITERBI

14

$\Delta^2$: candidate value